# EUROPEAN PATENT APPLICATION

(11) **EP 4 447 474 A1**
(43) Date of publication of application: **16.10.2024**
(21) Application number: 22904038.1
(22) Date of filing: 24.11.2022
(51) Int. Cl.: H04N 23/661, G02B 7/28, G03B 15/00, G03B 17/00, G03B 17/18, H04N 23/63, H04N 23/90

(54) **IMAGING CONTROL DEVICE, IMAGING DEVICE, PROGRAM, AND IMAGING SYSTEM**

(30) Priority: 08.12.2021 JP 2021199299
(71) Applicant: NIKON CORPORATION, Minato-ku Tokyo 108-6290 (JP)
(72) Inventor: TAKESHITA Tetsuya, Tokyo 108-6290 (JP); HINO Mitsuteru, Tokyo 108-6290 (JP); ISHIKAWA Takumi, Tokyo 108-6290 (JP); IWAMI Kenichiro, Tokyo 108-6290 (JP); YOSHIDA Yusuke, Tokyo 108-6290 (JP); SHIMBORI Taketoshi, Tokyo 108-6290 (JP)
(74) Representative: Hoffmann Eitle
(86) International application number: PCT/JP2022/043331
(87) International publication number: WO 2023/106107

(57) **Abstract**

An imaging control device includes: a distance information acquisition unit (301) that acquires distance information from a first imaging device to a subject; and an operation control unit (302) that controls a state to an operable state in which the first imaging device is capable of performing a remote operation on a second imaging device based on the distance information acquired by the distance information acquisition unit (301).

## Description

### TECHNICAL FIELD

The present invention relates to an imaging control device, an imaging device, a program, and an imaging system.

Priority is claimed on Japanese Patent Application No. 2021-199299, filed on December 8, 2021, the contents of which are incorporated herein by reference.

### BACKGROUND

In the related art, various techniques that image athletes have been proposed in sporting events or the like. For example, a photographing system is known which includes a plurality of cameras capable of photographing a subject that moves on a course from different orientations and a controller that switches output images of a plurality of cameras in accordance with a set switching order (for example, refer to Patent Document 1 described below).

### [Related Art Documents]

### [Patent Documents]

[Patent Document 1]
PCT International Publication No. 2017/119034

### SUMMARY OF THE INVENTION

An aspect of the present invention is an imaging control device including: a distance information acquisition unit that acquires distance information from a first imaging device to a subject; and an operation control unit that controls a state to an operable state in which the first imaging device is capable of performing a remote operation on a second imaging device based on the distance information acquired by the distance information acquisition unit.

An aspect of the present invention is an imaging control device including: a request information acquisition unit that acquires request information indicating a request in which one first imaging device among a plurality of first imaging devices performs a remote operation on a second imaging device; and an operation control unit that controls a state to an operable state in which the first imaging device is capable of performing a remote operation on the second imaging device based on the request information acquired by the request information acquisition unit.

An aspect of the present invention is an imaging device including: a distance information acquisition unit that acquires distance information from an own device to a subject; and an operation control unit that controls a state to an operable state in which the own device is capable of performing a remote operation on another imaging device based on the distance information acquired by the distance information acquisition unit.

An aspect of the present invention is an imaging device including: a request information acquisition unit that acquires request information indicating a request in which an own device among a plurality of imaging devices performs a remote operation on another imaging device; and an operation control unit that controls a state to an operable state in which the own device is capable of performing a remote operation on the other imaging device based on the request information acquired by the request information acquisition unit.

An aspect of the present invention is a program that causes a computer used in an imaging control device to function as: a distance information acquisition unit that acquires distance information from a first imaging device to a subject; and an operation control unit that controls a state to an operable state in which the first imaging device is capable of performing a remote operation on a second imaging device based on the distance information acquired by the distance information acquisition unit.

An aspect of the present invention is a program that causes a computer used in an imaging control device to function as: a request information acquisition unit that acquires request information indicating a request in which a first imaging device among a plurality of first imaging devices performs a remote operation on a second imaging device; and an operation control unit that controls a state to an operable state in which the first imaging device is capable of performing a remote operation on the second imaging device based on the request information acquired by the request information acquisition unit.

An aspect of the present invention is an imaging system including: a first imaging device; a second imaging device; and an imaging control device, wherein the imaging control device includes: a distance information acquisition unit that acquires distance information from the first imaging device to a subject; and an operation control unit that controls a state to an operable state in which the first imaging device is capable of performing a remote operation on the second imaging device based on the distance information acquired by the distance information acquisition unit.

An aspect of the present invention is an imaging system including: a first imaging device; a second imaging device; and an imaging control device, wherein the imaging control device includes: a request information acquisition unit that acquires request information in which the first imaging device among a plurality of first imaging devices indicates a request of a remote operation on the second imaging device; and an operation control unit that controls a state to an operable state in which the first imaging device is capable of performing a remote operation on the second imaging device based on the request information acquired by the request information acquisition unit.

### BRIEF DESCRIPTION OF DRAWINGS

FIG. 1 is an explanatory view showing an example of an imaging system according to a first embodiment.
FIG. 2 is a schematic block diagram showing an example of a configuration of a master camera according to the first embodiment.
FIG. 3 is an explanatory view showing an example of a functional configuration of the master camera according to the first embodiment.
FIG. 4 is a flow chart showing an example of various settings performed by the master camera prior to the start of photographing.
FIG. 5 is a flow chart showing an example of a remote photographing process performed by the master camera.
FIG. 6 is a flow chart showing an example of a release button process performed by the master camera according to the first embodiment.
FIG. 7 is a flow chart showing an example of a setting change process performed by the master camera.
FIG. 8A is an explanatory view showing an example of a screen displayed on an electronic finder.
FIG. 8B is an explanatory view showing an example of a screen displayed on the electronic finder.
FIG. 8C is an explanatory view showing an example of a screen displayed on the electronic finder.
FIG. 9 is an explanatory view showing an example of a functional configuration of a master camera according to a first modification example.
FIG. 10 is a flow chart showing an example of a process according to the first modification example performed by the master camera when a subject distance is in a first range.
FIG. 11 is a flow chart showing an example of a process according to the first modification example performed by the master camera when the subject distance is in a second range.
FIG. 12 is a flow chart showing an example of a process according to the first modification example performed by the master camera when the subject distance is in a third range.
FIG. 13 is an explanatory view showing an example of a functional configuration of a master camera according to a second modification example.
FIG. 14 is a flow chart showing an example of a process according to the second modification example performed by the master camera when a subject distance is in a first range.
FIG. 15 is a flow chart showing an example of a process according to the second modification example performed by the master camera when the subject distance is in a second range.
FIG. 16 is a flow chart showing an example of a manual switching process performed by a master camera according to a third modification example.
FIG. 17 is a flow chart showing an example of a release button process performed by a master camera according to a fourth modification example.
FIG. 18 is an explanatory view showing an example of an imaging system according to a fifth modification example.
FIG. 19 is a flow chart showing an example of a remote photographing process performed by a master camera according to the fifth modification example.
FIG. 20 is an explanatory view showing an example of an imaging system according to a second embodiment.
FIG. 21 is an explanatory view showing an example of a functional configuration of a master camera according to the second embodiment.
FIG. 22 is a sequence view showing a basic flow when changing a control right of the master camera.
FIG. 23 is a flow chart showing an example of a process at the time of starting an electric power source performed by the master camera according to the second embodiment.
FIG. 24 is a flow chart showing an example of a remote photographing process performed by the master camera according to the second embodiment.
FIG. 25 is a flow chart showing an example of a release button process performed by the master camera according to the second embodiment.
FIG. 26A is an explanatory view showing an example of a screen of the second embodiment displayed on an electronic finder.
FIG. 26B is an explanatory view showing an example of a screen of the second embodiment displayed on the electronic finder.
FIG. 26C is an explanatory view showing an example of a screen of the second embodiment displayed on the electronic finder.
FIG. 27 is an explanatory view showing an example of an imaging system according to a third embodiment.

### DESCRIPTION OF EMBODIMENTS

### (Embodiments)

Hereinafter, with reference to the drawings, a first embodiment to a third embodiment of the present invention will be described with reference to the drawings.

### (About imaging system St according to first embodiment)

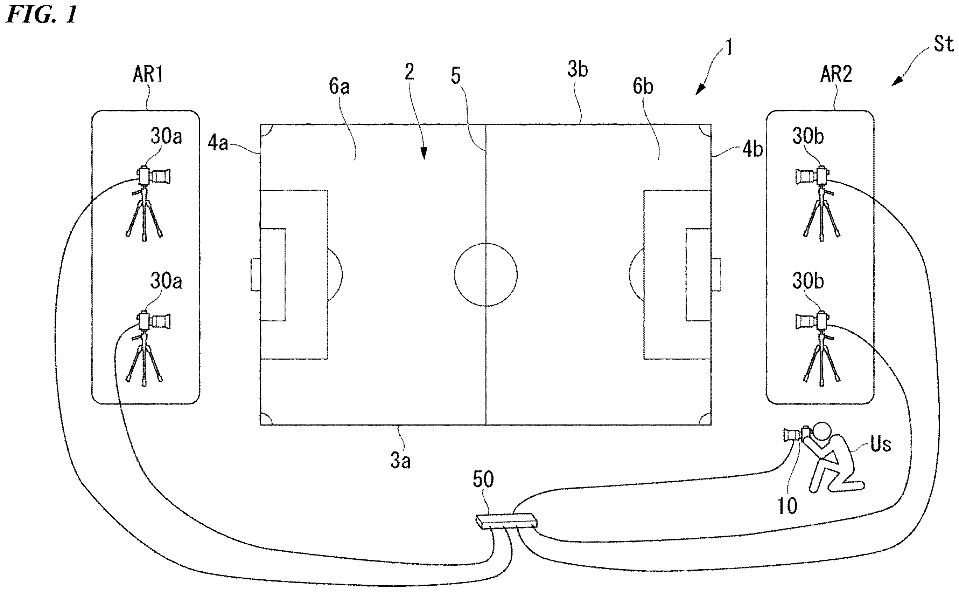

FIG. 1 is an explanatory view showing an example of an imaging system St according to a first embodiment. In FIG. 1, the imaging system St is used in a soccer game. As shown in FIG. 1, a soccer stadium 1 includes a rectangular field 2 in which players play. The field 2 includes a touch line 3 (3a, 3b) in a longitudinal direction and a goal line 4 (4a, 4b) in a width direction. The field 2 includes a first territory 6a that becomes a territory of one team and a second territory 6b that becomes a territory of the other team with a halfway line 5 as a boundary.

The imaging system St includes a master camera 10, a remote camera 30 (30a, 30b, and a relay device 50. The master camera 10 and the remote camera 30 are connected via the relay device 50 so as to be capable of communicating with each other. The relay device 50 is a router that connects the master camera 10 and the remote camera 30 to a network via a wired LAN (Local Area Network) cable. The connection between the cameras by the relay device 50 is not limited to the connection by the wired LAN and may be a connection by a wireless LAN or may be a connection by a Wi-fi (registered trademark).

The master camera 10 is an example of a first imaging device. The master camera 10 is operated by a user Us who is a photographer. The user Us uses the master camera 10 to image a subject that is a player in a region outside the field on a rear side of the goal line 4b. That is, the master camera 10 is arranged in the region on the rear side (a right side in FIG. 1) of the goal line 4b when seen from the field 2. The master camera 10 may be remotely operated by a remote user Us via a network instead of a direct operation of the master camera 10 by the user Us.

The remote camera 30 is an example of a second imaging device. The remote camera 30 includes a plurality of first remote cameras 30a and a plurality of second remote cameras 30b. The number of each of the first remote camera 30a and the second remote camera 30b may be one. The first remote camera 30a is arranged in a first area AR1. The first area AR1 is arranged in a region outside the field on the rear side of the goal line 4a. That is, the first remote camera 30a is arranged in the region on the rear side (a left side in FIG. 1) of the goal line 4a when seen from the field 2.

The second remote camera 30b is arranged in a second area AR2. The second area AR2 is a region outside the field on the same side as a side where the master camera 10 is arranged. That is, the second remote camera 30b is arranged in the region on the rear side (the right side in FIG. 1) of the goal line 4b when seen from the field 2.

The master camera 10 can image the subject by an operation of the user Us and perform an imaging instruction to the remote camera 30 in response to the operation of the user Us. The remote camera 30 images a subject in an imaging region in response to the imaging instruction from the master camera 10. For example, the remote camera 30 images a subject by using a pan focus function. The pan focus function is a function that enables focusing from a near object to a far object by deepening the depth of field.

### (About configuration of master camera 10)

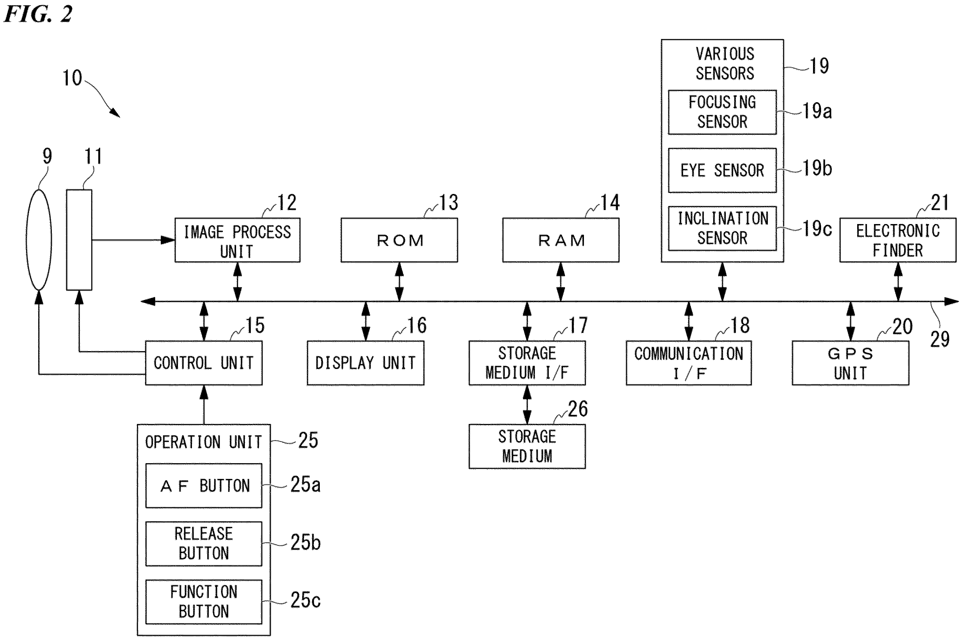

FIG. 2 is a schematic block diagram showing an example of a configuration of the master camera 10 according to the first embodiment. FIG. 2 is described using an example of the master camera 10; however, the remote camera 30 can also have a similar configuration.

In FIG. 2, the master camera 10 includes a lens 9, an imaging unit 11, an image process unit 12, a ROM (Read Only Memory) 13, a RAM (Random Access Memory) 14, a control unit 15, a display unit 16, a storage medium I/F (interface) 17, a communication I/F 18, various sensors 19, a GPS (Global Positioning System) unit 20, an electronic finder 21, an operation unit 25, a storage medium 26, and a bus 29. The image process unit 12 to the electronic finder 21 are connected to one another via the bus 29. The operation unit 25 is connected to the control unit 15.

The lens 9 is constituted of a plurality of lens groups including a focus lens and a zoom lens. The lens 9 includes one or more lenses. The lens 9 is driven by a lens drive device (not shown) on the basis of a control of the control unit 15.

The imaging unit 11 captures a subject image and generates pixel data (image data) of an image to be captured. Specifically, the imaging unit 11 has a plurality of pixels aligned in rows and columns and generates an analog pixel signal of the image by photoelectrically converting the subject image formed on an imaging surface. The analog pixel signal generated by the imaging unit 11 is adjusted and is A/D (analog/digital) converted by an analog front-end circuit (not shown). A converted digital pixel signal is output as image data to the image process unit 12.

The image process unit 12 stores the image data in the RAM 14. Further, the image process unit 12 performs various image processing such as a white balance. Further, the image process unit 12 displays a predetermined image on the display unit 16 and the electronic finder 21.

The ROM 13 stores an imaging control program that controls the master camera 10. The imaging control program includes a program relating to a remote operation of the remote camera 30 described later.

The RAM 14 stores the image data captured by the imaging unit 11, various setting information relating to the remote operation of the remote camera 30, and the like.

The control unit 15 is an example of an imaging control device. The control unit 15 includes a processor such as, for example, a CPU (Central processing unit) and performs overall control of the master camera 10.

The control unit 15 controls each unit of the master camera 10 by executing the imaging control program stored in advance in the ROM 13. For example, when receiving an imaging instruction via the operation unit 25, the control unit 15 causes the storage medium 26 to store the image data obtained via the imaging unit 11 as a captured image.

Further, the control unit 15 performs a control of an autofocus and a control of an automatic exposure. Specifically, the control unit 15 performs a range-finding process of a subject and controls the focus lens of the lens 9 on the basis of the result of the range-finding process. The autofocus includes a single-point autofocus and a multipoint autofocus. Further, the control unit 15 also performs a change of an exposure time, a control of an aperture mechanism (not shown), and the like.

The display unit 16 is a touch panel display. For example, the display unit 16 is a liquid crystal display. The display unit 16 displays an image generated by the image process unit 12 in response to an instruction of the control unit 15. The display unit 16 displays, for example, the image data captured by the imaging unit 11, an operation screen, and the like. Further, the display unit 16 also serves as the operation unit 25 that receives various operations from a user.

The storage medium I/F 17 is connected to a removable storage medium 26 such as a card memory and writes, reads, or erases image data on or from the storage medium 26.

The storage medium 26 is a storage unit attachably and detachably connected to the master camera 10 and, for example, stores (records) image data on which the image processing is performed by the image process unit 12 or the like. The storage medium 26 is, for example, an SD card, a micro SD card, or the like.

The communication I/F 18 controls an interface between a network and the inside and controls an input of data from an external device (for example, the remote camera 30) and an output of data to the external device. The communication I/F 18 is connected to a network such as the Internet. Further, the communication I/F 18 may be a wireless communication interface such as a mobile telephone line (for example, 5G (5th Generation), LTE (Long Term Evolution), PHS (Personal Handy-Phone System), or the like) or Bluetooth (registered trademark).

Various sensors 19 includes a focusing sensor 19a, an eye sensor 19b, and an inclination sensor 19c.

The focusing sensor 19a has a plurality of photoelectric conversion element arrays that receive a light flux of a subject. The photoelectric conversion element array outputs a signal in which the phase is matched when the photoelectric conversion element array is in a focused state, and outputs a signal in which the phase is shifted when the focus is shifted to a front side or a rear side of the subject. The shift amount of the phase corresponds to the shift amount from the focus state. The focusing sensor 19a detects a phase difference by performing a correlation calculation of the output of the photoelectric conversion element array and outputs a phase difference signal indicating the phase difference to the control unit 15.

The eye sensor 19b includes an optical sensor and detects whether the user Us is looking into the electronic finder 21 in response to a light reception amount of the optical sensor. The eye sensor 19b is provided, for example, next to the electronic finder 21.

The inclination sensor 19c detects an angle in an upward-downward direction of the master camera 10 with reference to a level. As the inclination sensor 19c, for example, a pendulum-type sensor or a float-type sensor can be used.

Further, various sensors 19 include a gyro sensor, an acceleration sensor, a distance sensor, and the like in addition to the sensors described above.

The GPS unit 20 receives position information from a GPS satellite and detects a present position of the master camera 10 on a map. Further, the master camera 10 may detect the present position of the master camera 10 by also using the detection result of various sensors 19 (for example, the gyro sensor, the acceleration sensor, the distance sensor, or the like). Further, the GPS unit 20 may be a unit of a type embedded in the master camera 10 or may be a unit of a type externally attached to the master camera 10.

The electronic finder 21 is a look-into-type image display unit. The electronic finder 21 includes a small LCD or an organic EL therein and can display various information.

The operation unit 25 includes an AF (autofocus) button 25a, a release button 25b, and a function button 25c. The operation unit 25 also includes an arrow key, a command dial, a touch panel, a mode switching button, a menu button, a power button, and the like. The operation unit 25 causes an input signal to be input to the control unit 15 in response to the content operated by the user.

The AF button 25a is a button that accepts an autofocus function. The autofocus function is a function that continues focusing a subject even when the subject moves. The focusing on the subject can also be performed by pressing the release button 25b half.

The release button 25b is a button that is fully pressed and thereby accepts that the image data generated by the image process unit 12 is stored in a predetermined storage unit such as the storage medium 26.

The predetermined storage unit includes an external storage device.

The function button 25c is a button that accepts performing an imaging instruction to the remote camera 30 by a remote operation. The button that accepts the imaging instruction by a remote operation is not limited to the function button 25c and may be any button among the buttons included in the operation unit 25. Further, the button that accepts the imaging instruction by a remote operation can also be any button selected by the user Us. When the function button 25c and the release button 25b are pressed simultaneously, the master camera 10 stores the image data in the storage medium 26 and performs the imaging instruction to the remote camera 30. For example, the user Us fully presses the release button 25b while pressing the function button 25c and thereby causes the storing of the image data in the predetermined storage unit and the imaging instruction to the remote camera 30 to be performed. The imaging instruction may be performed by a remote operation to the remote camera 30, for example, by speech recognition in place of the button.

The bus 29 connects the image process unit 12, the ROM 13, the RAM 14, the control unit 15, the display unit 16, the storage medium I/F 17, the communication I/F 18, various sensors 19, the GPS unit 20, and the electronic finder 21 and transfers the image data, the control signal, and the like that are output from each part.

### (About remote operation of remote camera 30 according to first embodiment)

Here, in a soccer, the offense and the defense are frequently switched. For example, players may concentrate in the first territory 6a (a side far from the master camera 10) in the field 2, and the players may concentrate in the second territory 6b (a side close to the master camera 10) in the field 2. If an imaging instruction is performed to the remote camera 30 when the players concentrate in the first territory 6a, the imaging is performed not only on the first remote camera 30a but also on the second remote camera 30b. In this case, the imaging of the second remote camera 30b becomes an image in which, since the distance to a subject (player) is far, the subject in the imaging range is captured to be small, and which has a low utility value. Therefore, a useless image is captured.

Therefore, in the present embodiment, it is possible to perform the imaging separately with respect to the first remote camera 30a and the second remote camera 30b. Hereinafter, a functional configuration of the master camera 10 according to the first embodiment is described. In the following description, it is assumed that, among a plurality of operation modes in which the master camera 10 can operate, the mode is any of a remote photographing mode for remotely operating the remote camera 30 and a mode relating to various settings in the remote operation.

### (Functional configuration of master camera 10)

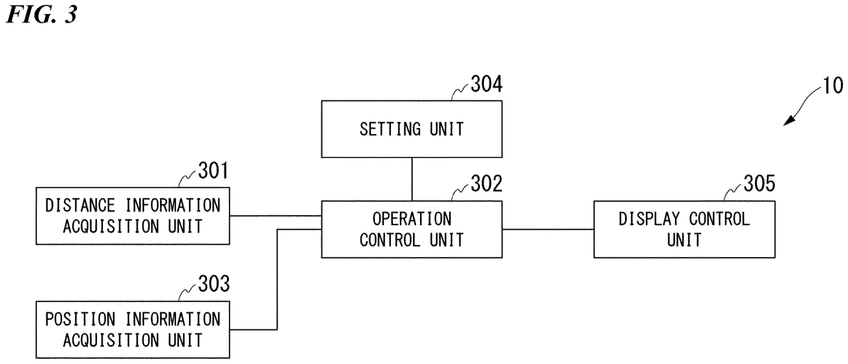

FIG. 3 is an explanatory view showing an example of a functional configuration of the master camera 10 according to the first embodiment. As shown in FIG. 3, the master camera 10 includes a distance information acquisition unit 301, an operation control unit 302, a position information acquisition unit 303, a setting unit 304, and a display control unit 305. The distance information acquisition unit 301, the operation control unit 302, the position information acquisition unit 303, and the setting unit 304 are realized by the control unit 15 (CPU). That is, by the control unit 15 executing the imaging control program stored in the ROM 13, a function of each unit 301 to 304 is realized. Further, the display control unit 305 is realized by the control unit 15 and the image process unit 12. That is, by the control unit 15 executing the imaging control program, by performing a predetermined instruction to the image process unit 12, a function of the display control unit 305 is realized.

### (About operable state)

The distance information acquisition unit 301 acquires distance information from the master camera 10 to the subject. The subject is a player in the field 2 and is a focused subject. The distance information is, for example, information obtained based on focus information of the subject in the master camera 10. The focus information is information corresponding to a distance to the subject when focusing the subject. For example, when the subject is present ahead by 40 m, the focus information is information indicating a control amount of the lens 9 corresponding to the distance to the subject when focusing a target that is present ahead by 40 m. Further, for example, the focus information may be focusing information or depth information when focusing a target that is present ahead by 40 m. The distance information may be obtained from a result of an image analysis of the image data. Hereinafter, the distance between the master camera 10 and a subject focused by the master camera 10 may be referred to as a "subject distance".

The subject is not limited to a player playing in the field 2 and may be, for example, a manager or a bench player outside the field 2. Further, the subject may be a player who temporarily plays outside the field 2 such as a player who performs a throwing motion in a soccer game. Further, instead of acquiring the distance information to the subject on the basis of the focus information of the subject, for example, the distance to the subject may be acquired by using a Time-Of-Flight method.

The operation control unit 302 controls an operation state to an operable state on the basis of the distance information from the master camera 10 to the subject. The operable state is a state in which the master camera 10 is capable of performing a remote operation on the remote camera 30. The remote operation is to cause the remote camera 30 to capture an image in response to the operation of the master camera 10. Specifically, for example, when the function button 25c (a button for the remote operation) of the master camera 10 and the release button 25b are turned on simultaneously, or when the function button 25c is turned on, followed by the release button 25b, the master camera 10 performs the imaging instruction to the remote camera 30.

When the release button 25b is turned on at the same time as the function button 25c first, in the subsequent remote operation, it is possible to perform the imaging instruction to the remote camera 30 by turning on only the release button 25b. When there is an imaging instruction from the master camera 10, the remote camera 30 performs imaging. The imaging means that the image data obtained from the imaging unit 11 is stored as a capture image in the storage medium 26 or is transmitted to an external device (a storage device or the like) via the communication I/F 18.

### (About position relationship between master camera 10 and remote camera 30)

The position information acquisition unit 303 acquires position information of each of the master camera 10 and the remote camera 30. The position information of the master camera 10 is obtained from the GPS unit 20 included in the master camera 10. The position information of the remote camera 30 is obtained from a GPS unit included in the remote camera 30.

Further, instead of acquiring the position information from the GPS unit 20, the inside of a playing field may be photographed by a camera (not shown) provided above the soccer stadium 1, and the position information of the respective cameras 10 and 30 may be acquired based on the recognized positions of the master camera 10 and the remote camera 30. At this time, it is sufficient that the relative position relationship of each of the master camera 10 and the remote camera 30 in the soccer stadium 1 can be acquired.

The operation control unit 302 controls the state to the operable state on the basis of each position information acquired by the position information acquisition unit 303. Specifically, the operation control unit 302 controls the state to the operable state in accordance with a subject distance and the position relationship between the master camera 10 and the remote camera 30.

As an example, the master camera 10 determines whether or not the remote camera 30 is in a predetermined range from (is close to) the position of the master camera 10 on the basis of each position information. When it is determined that the remote camera 30 is in the predetermined range, that is, when the remote camera 30 is close to the master camera 10, the distance from the remote camera 30 to the subject also becomes far when the subject distance becomes a certain value or more. Therefore, the image captured by the remote camera 30 becomes a far image and therefore becomes an image having a low utility value. In this case, the operation control unit 302 does not control the state to the operable state in which the remote operation to the remote camera 30 can be performed.

On the other hand, when the subject distance is less than the certain value in the case where the remote camera 30 is close to the master camera 10, the distance from the remote camera 30 to the subject also becomes close. Therefore, the image captured by the remote camera 30 is a near image and therefore becomes a required image. In this case, the operation control unit 302 controls the state to the operable state in which the remote operation to the remote camera 30 can be performed.

In the present embodiment, the operation control unit 302 controls the state to the operable state on the basis of a setting content based on the position information set in the setting unit 304 described below.

### (About setting of remote camera 30 for each area AR)

The setting unit 304 sets the remote camera 30 for each area AR. The setting unit 304 sets the first remote camera 30a arranged in the first area AR1. Further, the setting unit 304 sets the second remote camera 30b arranged in the second area AR2. Specifically, the setting unit 304 assigns a PIN (Personal Identification Number) code that is common in each area AR to each remote camera 30. The setting unit 304 can accept an operation of the user Us and set the remote camera 30 for each area AR. Further, the number of the remote camera 30 in each area AR can be an arbitrary number.

Further, the setting unit 304 can set the remote camera 30 for each area AR on the basis of the position information acquired by the position information acquisition unit 303. Specifically, the setting unit 304 determines whether the remote camera is a remote camera 30 (first remote camera 30a) in a far area AR (first area AR1) or is a remote camera 30 (second remote camera 30b) in a near area AR (second area AR2) on the basis of the position information and sets the remote camera 30 for each area AR in accordance with the determination result.

The operation control unit 302 controls the remote camera 30 to be in an operable state for each area AR. Hereinafter, an operable state in which a remote operation can be performed on the remote camera 30 (first remote camera 30a) in the first area AR1 is referred to as a "first operable state". Further, an operable state in which a remote operation can be performed on the remote camera 30 (second remote camera 30b) in the second area AR2 is referred to as a "second operable state". For example, the first remote camera 30a in the first area AR1 can be set to the "first operable state" when the subject distance is equal to or more than a certain value, and the second remote camera 30b in the second area AR2 can be set to the "second operable state" when the subject distance is equal to or less than the certain value.

The operation control unit 302 can switch between the first operable state and the second operable state. Further, the operation control unit 302 can also control the first operable state and the second operable state simultaneously. Further, the operation control unit 302 can also control the state to a state that is neither the first operable state nor the second operable state.

The setting content set by the setting unit 304 may be stored in the storage medium 26 or the like. For example, in a soccer game, the master camera 10 and the remote camera 30 are arranged at a similar position in the each game. Therefore, by storing setting contents, the setting unit 304 may read a setting content selected in response to an operation of the user Us from among the stored setting contents and set the read setting content.

### (About distance from master camera 10 in each area AR)

In the present embodiment, the distance from the master camera 10 to each of first area AR1 and the second area AR2 is different from each other. That is, the setting unit 304 sets each area AR such that the distance from the master camera 10 to the first area AR1 is different from the distance from the master camera 10 to the second area AR2.

In the present embodiment, the first area AR1 is arranged farther from the master camera 10 than the second area AR2. For example, the first remote camera 30a arranged at the closest position from the master camera 10 in the first area AR1 is arranged farther than the second remote camera 30b arranged at the farthest position from the master camera 10 in the second area AR2.

### (About setting change of remote camera 30)

In a soccer game, for example, in the case of a one-sided game or the like, the user Us (master camera 10) may change the position between a first half and a second half of the game. Specifically, the user Us may be located on the rear side of one goal line 4b in the first half of the game and be located on the rear side of the other goal line 4a in the second half of the game. More specifically, the user Us may move from a position (position on the second territory 6b side) in the first half to a position (on the first territory 6a side) on the opposite side with the halfway line 5 as a target axis. In this case, the position relationship between each remote camera 30 and the master camera 10 is reversed between the first half and the second half.

Therefore, the setting unit 304 allows the first remote camera 30a set in the first area AR1 and the second remote camera 30b set in the second area AR2 to be switchable. That is, the setting unit 304 can set the second remote camera 30b in the first area AR1 and set the first remote camera 30a in the second area AR2. The switch of the remote camera 30 is performed in response to the operation of the user Us. The operation of the user Us can be performed, for example, by an operation (one-touch operation). Specifically, in the remote photographing mode or an operation mode relating to various settings, any button of the operation unit 25 may be assigned as a button for switching.

Further, the setting unit 304 can determine that user Us has moved to a position on the opposite side on the basis of position information. The setting unit 304 may prompt the switch of the remote camera 30 when it is determined that the user Us has moved to the position on the opposite side. Specifically, the setting unit 304 may display a selection screen of asking whether or not the remote camera 30 is switched on the display unit 16 on the basis of the position information and perform the switching in accordance with the selection of the user Us.

### (About threshold value)

Here, whether or not the operation control unit 302 sets the state to the operable state is determined depending on a range of the subject distance. For example, the operation control unit 302 controls the state to the second operable state when the subject distance x is in the range of "5 m < x ≤ 40 m" and controls the state to the first operable state when the subject distance x is in the range of "60 m < x ≤ 100 m". In order to define these ranges, it is necessary to set a threshold value (a first threshold value and a second threshold value). The threshold value is set for each area AR in which the remote camera 30 is arranged. Hereinafter, each threshold value is described.

### (About first threshold value)

The operation control unit 302 controls the state to the operable state on the basis of whether or not the subject distance exceeds the first threshold value. Specifically, the operation control unit 302 controls the state to the operable state when the subject distance does not exceed the first threshold value (upper limit value). More specifically, the first threshold value for the first area AR1 (first remote camera 30a) is, for example, 100 m. The operation control unit 302 controls the state to the first operable state when the subject distance does not exceed 100 m. Further, the first threshold value for the second area AR2 (second remote camera 30b) is, for example, 40 m. The operation control unit 302 controls the state to the second operable state when the subject distance does not exceed 40 m.

### (About second threshold value)

Further, the operation control unit 302 controls the state to the operable state on the basis of whether or not the subject distance exceeds the second threshold value that is smaller than the first threshold value. Specifically, the operation control unit 302 controls the state to the operable state when the subject distance exceeds the second threshold value (lower limit value). The second threshold value for the first area AR1 (first remote camera 30a) is, for example, 60 m. The operation control unit 302 controls the state to the first operable state when the subject distance exceeds 60 m. The second threshold value for the second area AR2 (second remote camera 30b) is, for example, 5 m. The operation control unit 302 controls the state to the second operable state when the subject distance exceeds 5 m.

In the following description, the range "60 m < x ≤ 100 m" of the subject distance x controlled to the first operable state is referred to as a "first range". Further, the range "5 m < x ≤ 40 m" of the subject distance x controlled to the second operable state is referred to as a "second range". Further, a range "40 m < x ≤ 60 m" of the subject distance x is referred to as a "third range". When the range of the subject distance x is the third range, the operation control unit 302 controls the state to the first operable state and the second operable state simultaneously. When the range of the subject distance x is the third range, the operation control unit 302 may not control the state to the first operable state and the second operable state simultaneously, and the master camera 10 may perform the photographing of the subject.

Further, when the subject distance is not in any of the first range, the second range, and the third range, specifically, there are cases where the subject distance is in the range of "0 m < x ≤ 5 m" or exceeds 100 m. In this case, the operation control unit 302 does not control the state to the operable state, that is, does not control the state to any of the operable states. However, even in this case, the operation control unit 302 may maintain the last operable state as it is.

Further, the first threshold value and the second threshold value are set by accepting the operation of the user Us. For example, the first threshold value and the second threshold value may be obtained from distance information based on the focus information obtained by the operation of the user Us. Further, the first threshold value and the second threshold value may accept a numerical value from the user Us. Further, the first threshold value and the second threshold value may be a numerical value read from the past history. The set threshold value can also be appropriately changed in accordance with the operation of the user Us.

Further, when the location where the master camera 10 and the remote camera 30 are arranged in the stadium is determined in advance, the first threshold value and the second threshold value may be stored in the RAM 14, the storage medium 26, or the like in association with the stadium since the position relationship between the respective cameras 10 and 30 does not change. In this case, by selecting the stadium, it is possible to acquire the respective stored threshold values. Further, without providing the second threshold value, by setting, for example, 50 m as the first threshold value, it is possible to control the state to the first operable state when the subject distance exceeds 50 m, and it is possible to control the state to the second operable state when the subject distance does not exceed 50 m.

### (About display to electronic finder 21)

The display control unit 305 displays, in the electronic finder 21, at least any one of the subject distance and an object indicating the operable state. The subject distance is displayed, for example, by a number (XX m). However, the subject distance is not limited to being displayed by a number and, for example, may be displayed by an image indicating a gauge. The image indicating the gauge is specifically an image having a bar graph form indicating the distance to the subject with respect to the maximum distance.

Further, the object indicating the operable state is an object indicating the first area AR1 in which the first remote camera 30a is arranged when the state is the first operable state, and is an object indicating the second area AR2 in which the second remote camera 30b is arranged when the state is the second operable state. Each of the object indicating the first area AR1 and the object indicating the second area AR2 is an image indicating a number (1 or 2) of the area AR. However, the object indicating each area AR is not limited to the image indicating the number and may be an image indicating a mark, a symbol, a character, or the like.

### (About various settings performed prior to start of photographing)

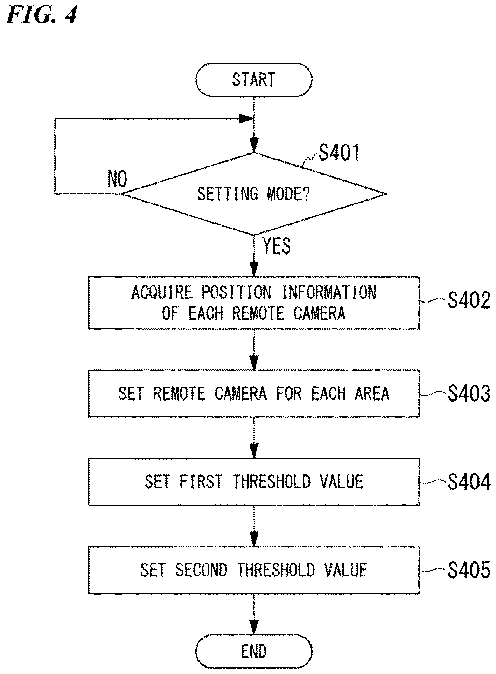

FIG. 4 is a flow chart showing an example of various settings performed by the master camera 10 prior to the start of photographing. In FIG. 4, the master camera 10 determines whether or not the mode becomes a setting mode in which various settings relating to the remote operation of the imaging system St are performed (Step S401). The setting mode is, for example, a mode to which the mode is transferred by setting the mode switching button of the operation unit 25 to a position indicating the setting mode and operating a predetermined operation button that accepts the start of an initial setting.

The master camera 10 waits until the mode becomes the setting mode (Step S401: NO). When the mode becomes the setting mode (Step S401: YES), the master camera 10 acquires the position information (Step S402). Then, the master camera 10 sets the remote camera 30 for each area AR (Step S403). More specifically, the master camera 10 sets a common PIN code for the remote cameras 30 in the same area AR. Further, in the setting of the remote camera 30, the master camera 10 sets information (for example, an IP address) of a transmission destination of each remote camera 30.

Next, the master camera 10 sets a first threshold value (upper limit value) for controlling the state to the operable state for each area AR (Step S404). Then, the master camera 10 sets a second threshold value (lower limit value) for controlling the state to the operable state for each area AR (Step S405) and terminates a sequence of processes. Each set content is stored in the RAM 14 or the storage medium 26.

### (About remote photographing process performed by master camera 10)

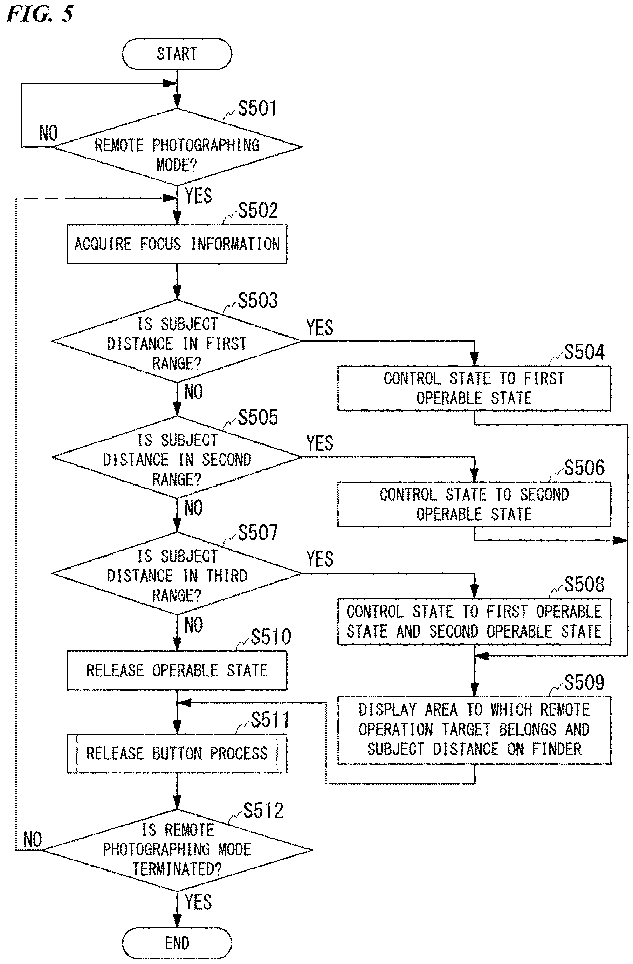

FIG. 5 is a flow chart showing an example of a remote photographing process performed by the master camera 10. In FIG. 5, the master camera 10 determines whether or not the mode becomes the remote photographing mode relating to the imaging system St (Step S501). The remote photographing mode is, for example, a mode to which the mode is transferred by setting the mode switching button of the operation unit 25 to a position indicating the photographing mode and operating a predetermined operation button that accepts the start of the remote photographing mode.

The master camera 10 waits until the mode becomes the remote photographing mode (Step S501: NO). When the mode becomes the remote photographing mode (Step S501: YES), the master camera 10 acquires the focus information (Step S502). Next, the master camera 10 determines whether or not the subject distance x is in the first range (60 m < x ≤ 100 m) (Step S503).

When the subject distance is in the first range (Step S503: YES), the master camera 10 controls the state to the first operable state (Step S504) and proceeds to Step S509. Thereby, the master camera 10 can perform the remote operation to the first remote camera 30a.

On the other hand, when the subject distance is not in the first range (Step S503: NO), the master camera 10 determines whether or not the subject distance x is in the second range (5 m < x ≤ 40 m) (Step S505).

When the subject distance is in the second range (Step S505: YES), the master camera 10 controls the state to the second operable state (Step S506) and proceeds to Step S510. Thereby, the master camera 10 can perform the remote operation to the second remote camera 30b.

On the other hand, when the subject distance is not in the second range (Step S505: NO), the master camera 10 determines whether or not the subject distance x is in the third range (40 m < x ≤ 60 m) (Step S507).

When the subject distance is in the third range (Step S507: YES), the master camera 10 controls the state to the first operable state and the second operable state (Step S508). Thereby, the master camera 10 can perform the remote operation to the first remote camera 30a and the second remote camera 30b simultaneously. Then, the master camera 10 displays the area AR to which the remote camera 30 as a remote operation target belongs and the subject distance on the electronic finder 21 (Step S509).

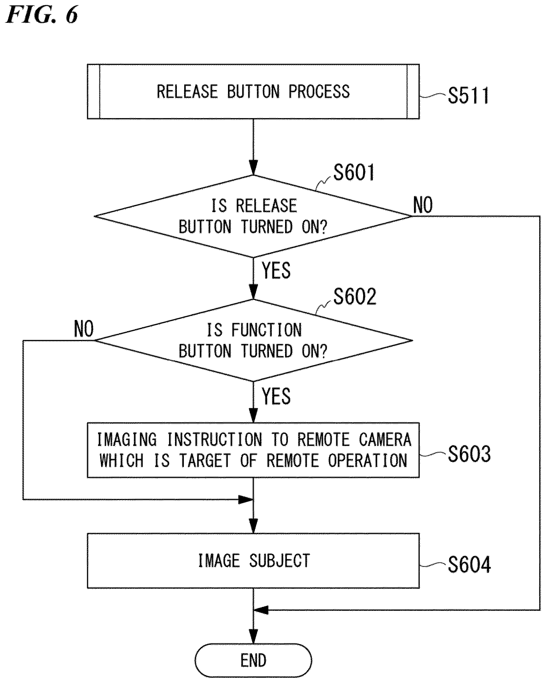

In Step S507, when the subject distance is not in the third range (Step S507: NO), the master camera 10 releases all of the operable states (Step S510). Then, the master camera 10 performs a release button process (refer to FIG. 6) (Step S511). Next, the master camera 10 determines whether or not the remote photographing mode is terminated (Step S512). The termination of the remote photographing mode is, for example, that the power is turned off or that the mode switching button of the operation unit 25 is set to a position indicating a mode other than the remote photographing mode.

When the remote photographing mode is not terminated (Step S512: NO), the master camera 10 returns to Step S502 and repeats the processes of Step S502 to Step S512. When the remote photographing mode is terminated (Step S512: YES), the master camera 10 terminates a sequence of processes.

### (About release button process according to first embodiment)

FIG. 6 is a flow chart showing an example of a release button process performed by the master camera 10 according to the first embodiment. In FIG. 6, the master camera 10 determines whether or not the release button 25b is turned on (fully pressed) (Step S601). When the release button 25b is not turned on (Step S601: NO), the master camera 10 proceeds directly to Step S512 (refer to FIG. 5). When the release button 25b is turned on (Step S601: YES), the master camera 10 determines whether or not the function button 25c (button for the remote operation) is turned on (Step S602).

When the function button 25c is not turned on (Step S602: NO), that is, when only the release button 25b is turned on, the master camera 10 proceeds to Step S604. On the other hand, when the function button 25c is turned on (Step S602: YES), that is, when the function button 25c and the release button 25b are turned on simultaneously, the master camera 10 performs the imaging instruction to the remote camera 30 as a remote operation target (Step S603). Thereby, it is possible to cause the remote camera 30 to image the subject in the imaging region. Then, the master camera 10 images the focused subject (Step S604) and proceeds to Step S512 (refer to FIG. 5).

### (About setting change process performed by master camera 10)

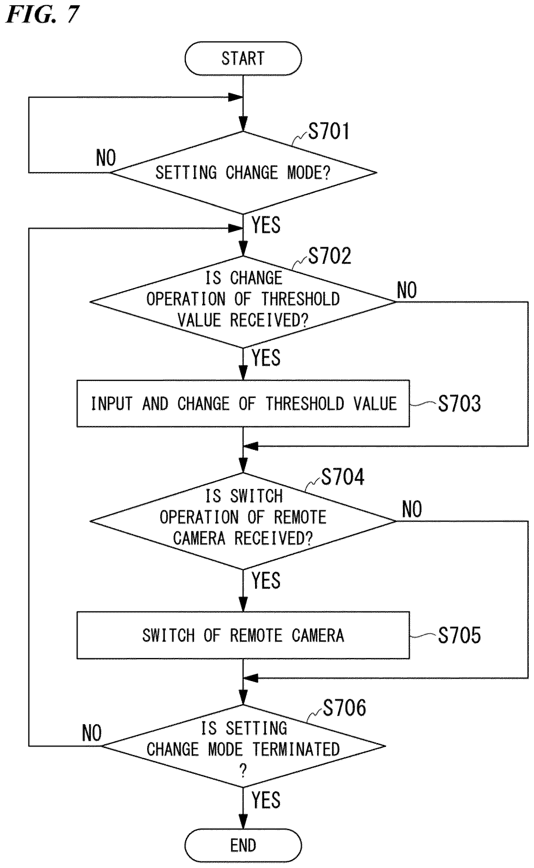

FIG. 7 is a flow chart showing an example of a setting change process performed by the master camera 10. In FIG. 4, the master camera 10 determines whether or not the mode becomes the setting change mode in which the setting relating to the imaging system St is performed (Step S701). The setting change mode is, for example, a mode to which the mode is transferred by setting the mode switching button of the operation unit 25 to a position indicating the setting mode and operating a predetermined operation button that accepts the start of a setting change.

The master camera 10 waits until the mode becomes the setting change mode (Step S701: NO). When the mode becomes the setting change mode (Step S701: YES), the master camera 10 determines whether or not a change operation of the threshold value is received (Step S702). When the change operation of the threshold value is not received (Step S702: NO), the master camera 10 proceeds to Step S704. When the change operation of the threshold value is received (Step S702: YES), the master camera 10 receives an input of the first threshold value and the second threshold value and changes each threshold value (Step S703). Thereby, it is possible to change the first range, the second range, and the third range.

Then, the master camera 10 determines whether or not the switch operation of the remote camera 30 is received (Step S704). When the switch operation of the remote camera 30 is not received (Step S704: NO), the master camera 10 proceeds to Step S706. When the switch operation of the remote camera 30 is received (Step S704: YES), the master camera 10 switches the first remote camera 30a set in the first area AR1 and the second remote camera 30b set in the second area AR2 (Step S705).

Next, the master camera 10 determines whether or not the setting change mode is terminated (Step S706). The termination of the setting change mode is, for example, that a predetermined button that receives a setting change is pressed. When the setting change mode is not terminated (Step S706: NO), the master camera 10 returns to Step S702 and repeats the processes of Step S702 to S706. When the setting change mode is terminated (Step S706: YES), the master camera 10 terminates a sequence of processes.

### (Screen example displayed on electronic finder 21)

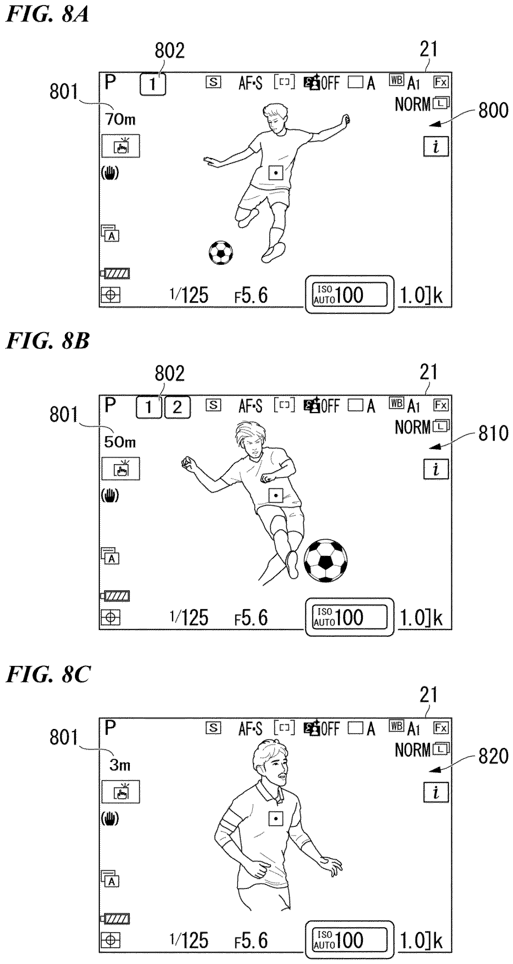

FIGS. 8A to 8C are explanatory views showing an example of a screen displayed on the electronic finder 21. The following screen may be displayed on the display unit 16. In FIGS. 8A, 8B, 8C, finder screens 800, 810, 820 are displayed on the electronic finder 21. Various kinds of information are displayed on the finder screens 800, 810, 820. In particular, in the present embodiment, the finder screens 800, 810 include distance information 801 and an object 802. The distance information 801 indicates a distance (subject distance) from the master camera 10 to the focused subject. The object 802 indicates a number of the area AR to which the remote camera 30 that can be remotely operated belongs.

In the finder screen 800 shown in FIG. 8A, the distance information 801 indicates "70 m", which indicates that the subject distance is 70 m. Further, the object 802 indicates "1", which indicates that the remote camera 30 as the remote operation target is the first remote camera 30a and indicates the first area AR1 to which the first remote camera 30a belongs.

In the finder screen 810 shown in FIG. 8B, the distance information 801 indicates "50 m", which indicates that the subject distance is 50 m. Further, the object 802 indicates "1" and "2", which indicates that the remote camera 30 as the remote operation target is the first remote camera 30a and the second remote camera 30b and indicates the first area AR1 to which the first remote camera 30a belongs and the second area AR2 to which the second remote camera 30b belongs.

In the finder screen 820 shown in FIG. 8C, the distance information 801 indicates "3 m", which indicates that the subject distance is 3 m. Further, the object 802 is not displayed, which indicates that the remote camera 30 as the remote operation target is not present.

In this way, by displaying the distance information 801 and the object 802, the user Us can confirm the subject distance and the remote camera 30 that can be remotely operated while looking into the electronic finder 21.

In FIGS. 8A to 8C, both the distance information 801 and the object 802 can be displayed; however, at least one of the distance information 801 and the object 802 may be displayed. That is, only the distance information 801 may be displayed, or only the object 802 may be displayed. When the user Us who operates the master camera 10 moves from the touch line 3a side to the touch line 3b side, the display position of "1" and "2" representing the object 802 displayed on the finder screen 820 may be automatically switched. Thereby, the direction of the first area AR1 and the second area AR2 in a real space can be matched to the direction of the display position of "1" and "2" corresponding to the respective areas AR1, AR2 in the finder screen 820.

As described above, the master camera 10 according to the first embodiment controls the state to the operable state in which the master camera 10 is capable of performing a remote operation on the remote camera 30 on the basis of the distance information (subject distance) from the master camera 10 to the subject. Thereby, depending on the subject distance, it is possible to cause the remote camera 30 to capture an image or not to capture an image by the remote operation. Accordingly, since it is possible to prevent an image having a low utility value from being captured in the remote camera 30, it is possible to cause the remote camera 30 to efficiently capture an image. Therefore, according to the first embodiment, it is possible to perform suitable imaging using the remote camera 30.

Further, in the first embodiment, the master camera 10 controls the state to the operable state on the basis of the position information of the master camera 10 and the position information of the remote camera 30. Thereby, it is possible to cause the remote camera 30 to capture an image by the remote operation in accordance with the subject distance and the position relationship between the master camera 10 and the remote camera 30. Accordingly, since it is possible to further efficiently prevent an image having a low utility value from being captured by the remote camera 30, it is possible to cause the remote camera 30 to further efficiently capture an image.

Further, in the first embodiment, the master camera 10 sets the first remote camera 30a arranged in the first area AR1 and the second remote camera 30b arranged in the second area AR2 for each area AR and controls the state to the operable state for each area AR. Thereby, it is possible to cause the remote camera 30 to capture an image in each area AR by the remote operation in accordance with the subject distance. Accordingly, since it is possible to prevent an image having a low utility value from being captured by the remote camera 30 in each area AR, it is possible to cause the remote camera 30 in each area AR to efficiently capture an image.

Further, in the first embodiment, each of the first area AR1 and the second area AR2 is arranged to have a different distance from the master camera 10. Thereby, it is possible to cause the first remote camera 30a and the second remote camera 30b that are remotely operated to be switched and capture an image in accordance with the subject distance.

Further, in the first embodiment, the master camera 10 can switch between the first remote camera 30a set in the first area AR1 and the second remote camera 30b set in the second area AR2. Thereby, when the user Us (master camera 10) moves from one goal line 4b side to the opposite goal line 4a side, by switching the remote cameras 30 set in respective areas AR, it is possible to easily set the remote cameras 30 in the respective areas AR.

Further, in the first embodiment, the master camera 10 controls the state to the operable state on the basis of whether the subject distance exceeds the first threshold value. Thereby, when the subject distance exceeds the first threshold value, it is possible cause the remote camera 30 not to capture an image. Accordingly, it is possible to cause the remote camera 30 to further efficiently capture an image.

Further, in the first embodiment, the master camera 10 controls the state to the operable state on the basis of whether or not the subject distance exceeds the second threshold value that is smaller than the first threshold value. Thereby, it is possible to cause the remote camera 30 to capture an image when the subject distance is in the range from the first threshold value to the second threshold value, namely, it is possible to cause the remote camera 30 not to capture an image when the subject distance exceeds the first threshold value or when the subject distance is equal to or less than the second threshold value. Accordingly, it is possible to cause the remote camera 30 to further efficiently capture an image.

Further, in the first embodiment, the first threshold value and the second threshold value are set for each area AR in which the remote camera 30 is arranged. Thereby, when each area AR falls within the range from the first threshold value to the second threshold value, it is possible to cause the remote camera 30 to capture an image. Accordingly, it is possible to cause the remote camera 30 to efficiently capture an image in each area.

Further, in the first embodiment, at least one of the distance information 801 (refer to FIG. 8A to 8C) and the object 802 indicating that the state is the operable state is displayed in the electronic finder 21 of the master camera 10. Thereby, when the user Us is looking into the electronic finder 21 of the master camera 10, it is possible to know the subject distance and the remote camera 30 that can be remotely operated.

Further, in the first embodiment, the subject distance is obtained on the basis of the focus information of the subject in the master camera 10. Thereby, the master camera 10 can easily obtain the distance information in association with focusing on the subject.

### (Modification examples of first embodiment and other embodiments)

Next, modification examples of the first embodiment and other embodiments are described. In the following modification examples and other embodiments, a description of the contents described in the above first embodiment is omitted as appropriate. Further, it is also possible to combine the first embodiment described above, modification examples, and other embodiments.

### (First modification example)

First, a first modification example of the first embodiment is described. In a shot-game-type play such as a soccer, the offense and defense are mixed regardless of the territory 6. For example, a team using the first territory 6a as a territory of the team may perform a counterattack to the second territory 6b. In such a case, if a player (subject) who tries to perform the counterattack is present in the first territory 6a, the player is imaged by the first remote camera 30a arranged on the first territory 6a side, and the player's back is imaged. On the other hand, if the second remote camera 30b arranged on the second territory 6b side images the player, it is possible to image the player from the front.

Therefore, in the first modification example, instead of or in addition to the configuration shown in the first embodiment described above, a configuration that controls the state to the operable state in accordance with a movement direction of a subject or a movement direction of a ball is described.

### (About functional configuration of master camera 10 according to first modification example)

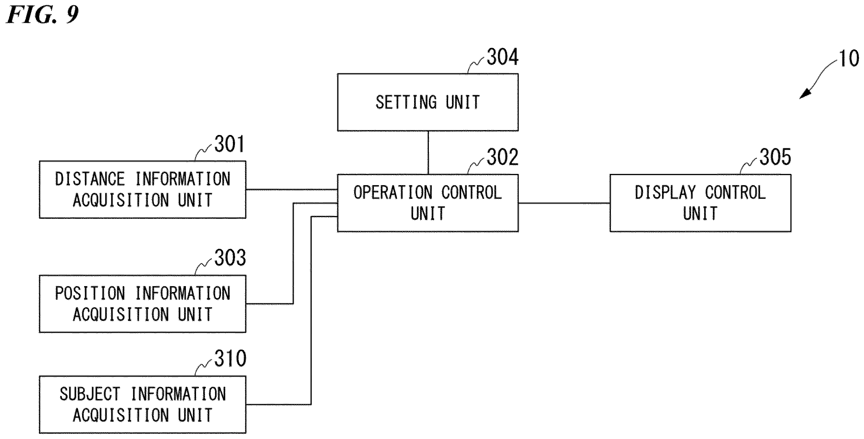

FIG. 9 is an explanatory view showing an example of a functional configuration of the master camera 10 according to the first modification example. As shown in FIG. 9, the master camera 10 according to the first modification example includes a subject information acquisition unit 310. The subject information acquisition unit 310 is realized by the control unit 15 (CPU).

### (About orientation of subject and movement direction)

The subject information acquisition unit 310 acquires subject information. The subject information includes at least one of the orientation of the subject imaged by the master camera 10 and the movement direction of the subject. The orientation of the subject is an orientation of the body of a player playing in the field 2 or an orientation of the face. The movement direction of the subject is a direction in which the player runs or a direction in which the player walks. The subject information can be obtained by performing an image analysis of the image data. The operation control unit 302 controls the state to the operable state on the basis of the subject information acquired by the subject information acquisition unit 310.

For example, even when the subject distance is in the first range (when the subject is present in the first territory 6a), when at least one of the orientation and the movement direction of the subject is at the master camera 10 side (second territory 6b side), the operation control unit 302 controls the state to the second operable state.

In the present modification example, when the subject distance is in the first range and when both the orientation and the movement direction of the subject are at the second territory 6b side, the operation control unit 302 controls the state to the second operable state. In the case where the orientation and the movement direction of the subject are different from each other such as the case where the player runs forward while facing rearward, the state may be controlled to the second operable state on the basis of any one of the orientation and the movement direction of the subject.

Further, even when the subject distance is in the second range (when the subject is present in the second territory 6b), when at least one of the orientation and the movement direction of the subject is at the opposite side of the master camera 10 side (first territory 6a side), the operation control unit 302 controls the state to the first operable state. In the present modification example, when the subject distance is in the second range and when both the orientation and the movement direction of the subject are at the first territory 6a side, the operation control unit 302 controls the state to the first operable state. Further, when the subject distance is in the third range, and the operation control unit 302 controls the state to the first operable state and the second operable state simultaneously, the operation control unit 302 may change the control such that any one of the first operable state and the second operable state is controlled in accordance with the orientation and the movement direction of the subject.

### (About movement direction of ball)

The subject information acquisition unit 310 acquires the movement direction of the ball imaged by the master camera 10. The ball is an example of a movable body. The movement direction of the ball can be obtained by performing an image analysis of the image data. The operation control unit 302 controls the state to the operable state on the basis of the movement direction of the ball acquired by the subject information acquisition unit 310.

For example, even when the subject distance is in the first range (when the subject is present in the first territory 6a), when the movement direction of the ball is at the master camera 10 side (second territory 6b side), the operation control unit 302 controls the state to the second operable state.

In the present modification example, when the subject distance is in the first range and when all of the orientation of the subject, the movement direction of the subject, and the movement direction of the ball are at the second territory 6b side, the operation control unit 302 controls the state to the second operable state.

Further, even when the subject distance is in the second range (when the subject is present in the second territory 6b), when the movement direction of the ball is at the opposite side of the master camera 10 side (first territory 6a side), the operation control unit 302 controls the state to the first operable state. In the present modification example, when the subject distance is in the second range and when all of the orientation direction of the subject, the movement direction of the subject, and the movement direction of the ball are at the first territory 6a side, the operation control unit 302 controls the state to the first operable state.

### (About process of master camera 10 performed at time of remote photographing according to first modification example)

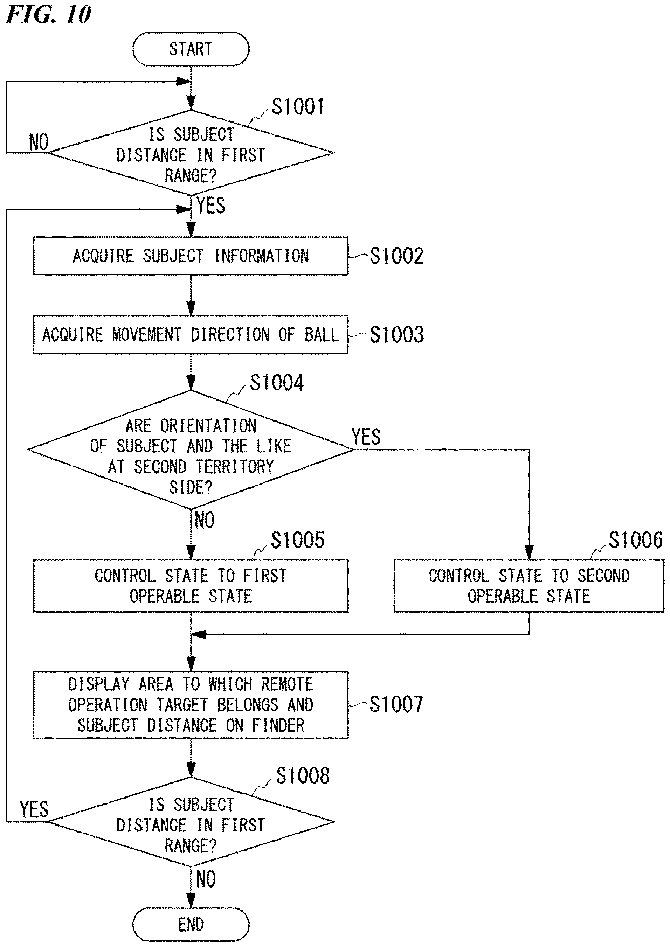

Next, the process of the master camera 10 performed at the time of remote photographing according to the first modification example is described with reference to FIG. 10 to FIG. 12. In FIG. 10 to FIG. 12, the case where the subject distance is in the first range, the case where the subject distance is in the second range, and the case where the subject distance is in the third range are separately described.

### (About process of first modification example performed by master camera 10 when subject distance is in first range)

FIG. 10 is a flow chart showing an example of a process according to the first modification example performed by the master camera 10 when a subject distance is in a first range. In FIG. 10, the master camera 10 determines whether or not the subject distance is in the first range (Step S1001). The master camera 10 waits until the subject distance is in the first range (Step S1001: NO).

When the subject distance is in the first range (Step S1001: YES), the master camera 10 acquires the subject information (Step S1002) and acquires the movement direction of the ball (Step S1003). In FIG. 10 to FIG. 12, the subject information and the movement direction of the ball are acquired when the subject distance is in the first range or the like; however, the embodiment is not limited thereto. The subject information and the movement direction of the ball may be constantly acquired.

Then, the master camera 10 determines whether or not the orientation of the subject and the like (all of the orientation of the subject, the movement direction of the subject, and the movement direction of the ball) are at the second territory 6b side (Step S1004). When the orientation of the subject and the like are not at the second territory 6b side (Step S1004: NO), that is, when at least one of the orientation of the subject, the movement direction of the subject, and the movement direction of the ball is not at the second territory 6b side, the master camera 10 controls the state to the first operable state (Step S1005).

On the other hand, when the orientation of the subject and the like are at the second territory 6b side (Step S1004: YES), that is, when all of the orientation of the subject, the movement direction of the subject, and the movement direction of the ball are at the second territory 6b side, the master camera 10 controls the state to the second operable state (Step S1006). That is, the master camera 10 controls the state to the second operable state although the subject distance is in the first range. Then, the master camera 10 displays the area AR to which the remote camera 30 as a remote operation target belongs and the subject distance on the electronic finder 21 (Step S1007).

Next, the master camera 10 determines whether or not the subject distance is in the first range (Step S1008). When the subject distance is in the first range (Step S1008: YES), the master camera 10 returns to Step S1002 and repeats the processes of Step S1002 to Step S1008. On the other hand, when the subject distance is not in the first range (Step S1008: NO), the master camera 10 terminates a sequence of processes.

### (About process of first modification example performed by master camera 10 when subject distance is in second range)

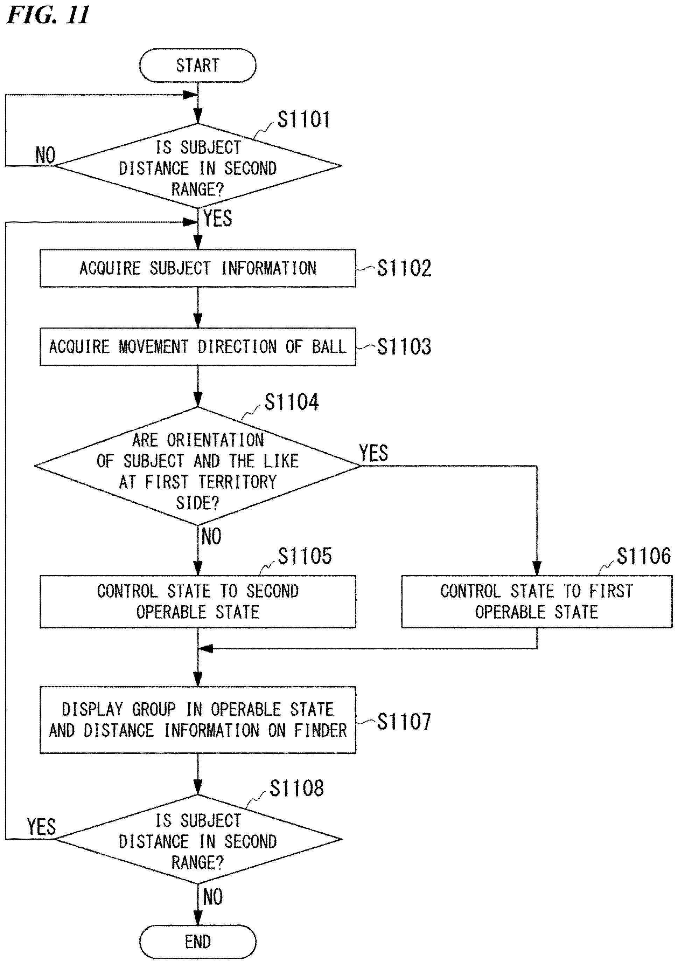

FIG. 11 is a flow chart showing an example of a process according to the first modification example performed by the master camera 10 when a subject distance is in a second range. In FIG. 11, the master camera 10 determines whether or not the subject distance to the subject is in the second range (Step S1101).

The master camera 10 waits until the subject distance is in the second range (Step S1101: NO). When the subject distance is in the second range (Step S1101: YES), the master camera 10 acquires the subject information (Step S1102) and acquires the movement direction of the ball (Step S1103).

Then, the master camera 10 determines whether or not the orientation of the subject and the like (all of the orientation of the subject, the movement direction of the subject, and the movement direction of the ball) are at the first territory 6a side (Step S1104). When the orientation of the subject and the like are not at the first territory 6a side (Step S1104: NO), that is, when at least one of the orientation of the subject, the movement direction of the subject, and the movement direction of the ball is not at the first territory 6a side, the master camera 10 controls the state to the second operable state (Step S1105).

On the other hand, when the orientation of the subject and the like are at the first territory 6a side (Step S1104: YES), that is, when all of the orientation of the subject, the movement direction of the subject, and the movement direction of the ball are at the first territory 6a side, the master camera 10 controls the state to the first operable state (Step S1106). That is, the master camera 10 controls the state to the first operable state although the subject distance is in the second range. Then, the master camera 10 displays the area AR to which the remote camera 30 as a remote operation target belongs and the subject distance on the electronic finder 21 (Step S1107).

Next, the master camera 10 determines whether or not the subject distance is in the second range (Step S1108). When the subject distance is in the second range (Step S1008: YES), the master camera 10 returns to Step S1102 and repeats the processes of Step S 1102 to Step S1108. On the other hand, when the subject distance is not in the second range (Step S1108: NO), the master camera 10 terminates a sequence of processes.

### (About process of first modification example performed by master camera 10 when subject distance is in third range)

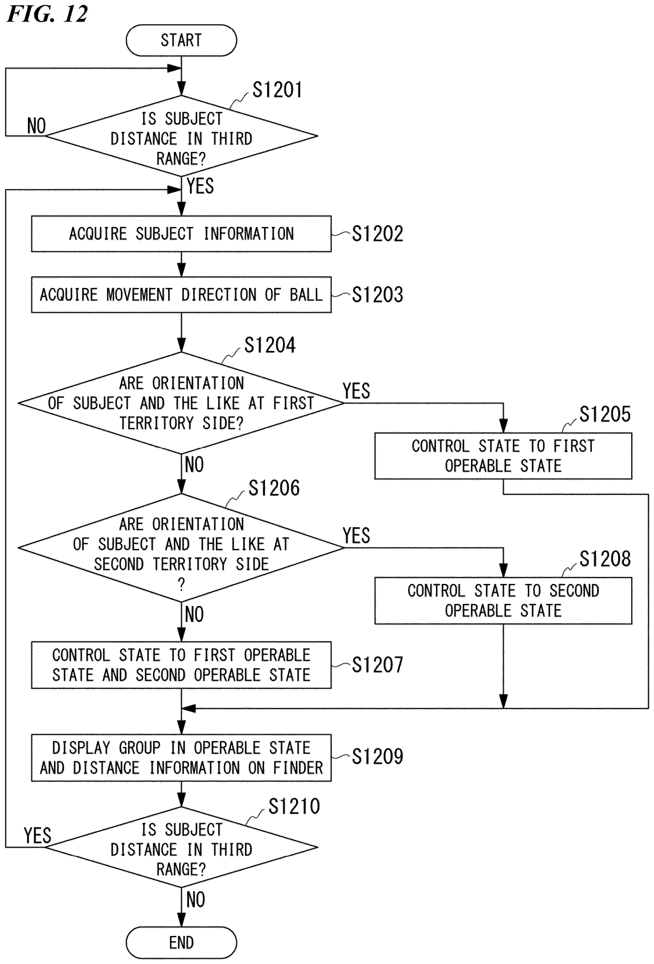

FIG. 12 is a flow chart showing an example of a process according to the first modification example performed by the master camera 10 when the subject distance is in a third range. In FIG. 12, the master camera 10 determines whether or not the subject distance is in the third range (Step S1201).

The master camera 10 waits until the subject distance is in the third range (Step S1201: NO). When the subject distance is in the third range (Step S1201: YES), the master camera 10 acquires the subject information (Step S1202) and acquires the movement direction of the ball (Step S1203).

Then, the master camera 10 determines whether or not the orientation of the subject and the like (all of the orientation of the subject, the movement direction of the subject, and the movement direction of the ball) are at the first territory 6a side (Step S1204). When the orientation of the subject and the like are at the first territory 6a side (Step S1204: YES), that is, when all of the orientation of the subject, the movement direction of the subject, and the movement direction of the ball are at the first territory 6a side, the master camera 10 controls the state to the first operable state (Step S1205) and proceeds to Step S1209. Thereby, even when the subject distance is in the third range, since it is possible to cause the second remote camera 30b not to capture an image, it is possible to prevent an image having a low utility value from being captured.

On the other hand, when the orientation of the subject and the like are not at the first territory 6a side (Step S1204: NO), that is, when at least one of the orientation of the subject, the movement direction of the subject, and the movement direction of the ball is not at the first territory 6a side, the master camera 10 determines whether or not the orientation of the subject and the like (all of the orientation of the subject, the movement direction of the subject, and the movement direction of the ball) are at the second territory 6b side (Step S1206). When the orientation of the subject and the like are not at the second territory 6b side (Step S1206: NO), that is, when at least one of the orientation of the subject, the movement direction of the subject, and the movement direction of the ball is not at the second territory 6b side, the master camera 10 controls the state to the first operable state and the second operable state (Step S1207) and proceeds to the Step S1209.

On the other hand, when the orientation of the subject and the like are at the second territory 6b side (Step S1206: YES), that is, when all of the orientation of the subject, the movement direction of the subject, and the movement direction of the ball are at the second territory 6b side, the master camera 10 controls the state to the second operable state (Step S1208). Thereby, even when the subject distance is in the third range, since it is possible to cause the first remote camera 30a not to capture an image, it is possible to prevent an image having a low utility value from being captured.

Then, the master camera 10 displays the area AR to which the remote camera 30 as a remote operation target belongs and the subject distance on the electronic finder 21 (Step S1209). Next, the master camera 10 determines whether or not the subject distance is in the third range (Step S1210). When the subject distance is in the third range (Step S1210: YES), the master camera 10 returns to Step S1202 and repeats the processes of Step S1202 to Step S1210. On the other hand, when the subject distance is not in the third range (Step S1210: NO), the master camera 10 terminates a sequence of processes.

In the present example, when the subject distance is in the first range or the second range, and when all of the orientation of the subject, the movement direction of the subject, and the movement direction of the ball are at the second territory 6b side or the first territory 6a side, the operation control unit 302 controls the state to the second operable state or the first operable state; however, the example is not limited to this embodiment. For example, when the subject distance is in the first range, and when any one of the orientation of the subject, the movement direction of the subject, and the movement direction of the ball is at the second territory 6b, the operation control unit 302 may control the state to the first operable state and the second operable state simultaneously. Thereby, even when the subject (player) is photographed in a small size by the second remote camera 30b in the second area AR2, it is possible to capture a subject facing the front, and therefore, it is possible to enhance the utility value of the photographed image.

As described above, the master camera 10 according to the first modification example controls the state to the operable state on the basis of the subject information including at least one of the orientation of the subject imaged by the master camera 10 and the movement direction of the subject. Thereby, even when the subject distance is in the first range, it is possible to control the state to the second operable state in accordance with the orientation of the subject and the movement direction of the subject. Accordingly, although the offense and defense are mixed regardless of the territory 6 in a shot-game-type play such as a soccer, it is possible to cause an optimum remote camera 30 to capture an image in accordance with the movement direction of the player or the like.

### (Second modification example)

Next, a second modification example of the first embodiment is described. In the first modification example described above, the state is controlled to the operable state in accordance with the movement direction of the subject or the movement direction of the ball. Here, even when the state is controlled to the first operable state, there may be cases in which it is desirable to capture an image by the second remote camera 30b depending on an orientation in which the master camera 10 faces the subject.

Therefore, in the second modification example, instead of or in addition to the configuration of the first modification example described above, a configuration that controls the state to the operable state in accordance with an orientation in which the master camera 10 faces the subject is described.

### (About functional configuration of master camera 10 according to second modification example)

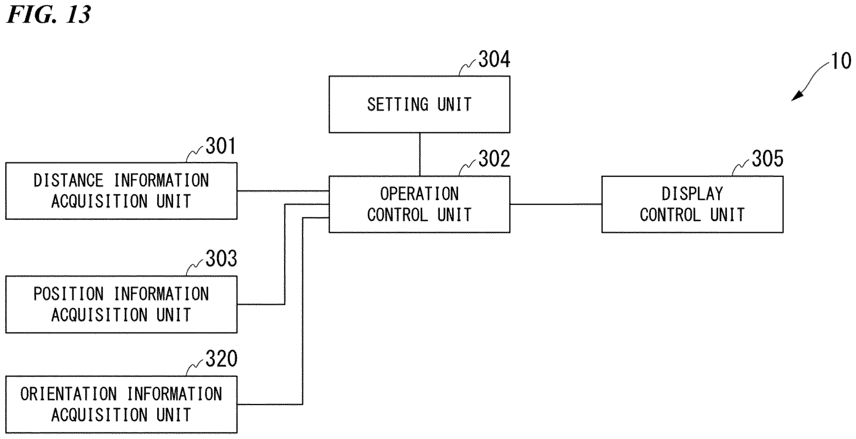

FIG. 13 is an explanatory view showing an example of a functional configuration of the master camera 10 according to the second modification example.

As shown in FIG. 13, the master camera 10 according to the second modification example includes an orientation information acquisition unit 320. The orientation information acquisition unit 320 is realized by the control unit 15 (CPU).

The orientation information acquisition unit 320 acquires orientation information indicating an orientation in which the master camera 10 faces the subject. The orientation information is information of an azimuth angle in a horizontal direction. The orientation information can be obtained, for example, from a detection result of the gyro sensor included in various sensors 19. The operation control unit 302 controls the state to the operable state on the basis of the orientation information acquired by the orientation information acquisition unit 320.

For example, even when the subject distance is in the first range (for example, when the subject is present in the first territory 6a), when the azimuth angle is in a predetermined range (first orientation range), the operation control unit 302 controls the state to the second operable state. The first orientation range can be set to an arbitrary orientation by the user Us.

Similarly, even when the subject distance is in the second range (for example, when the subject is present in the second territory 6b), when the azimuth angle is in a predetermined range (second orientation range), the operation control unit 302 controls the state to the first operable state. The second orientation range can be set to an arbitrary orientation by the user Us.

When the subject distance is in the third range, the operation control unit 302 controls the state to the first operable state and the second operable state regardless of the orientation information. However, even when the subject distance is in the third range, when the azimuth angle is in a predetermined range (third orientation range), the operation control unit 302 may control the state to only the first operable state. Similarly, even when the subject distance is in the third range, when the azimuth angle is in a predetermined range (fourth orientation range), the operation control unit 302 may control the state to only the second operable state. The third orientation range and the fourth orientation range can be set to an arbitrary orientation by the user Us.

In addition to controlling the state to the first operable state or the second operable state on the basis of the subject distance and the orientation information, it is also possible to control the state to the first operable state or the second operable state on the basis of the position information of the master camera 10. By using the position information of the master camera 10 in addition to the subject distance and the orientation information, it is possible to determine whether the subject is located in the first territory 6a or the second territory 6b with the halfway line 5 as a boundary. Therefore, for example, when it is determined that the subject is located in the first territory 6a, it is possible to control the state to the first operable state, and when it is determined that the subject is located in the second territory 6b, it is possible to control the state to the second operable state.

If the user Us moves to a region outside the field on an extension line of the halfway line 5, the distance from the master camera 10 to the first area AR1 may be similar to the distance from the master camera 10 to the second area AR2. In this case, by using the orientation information indicating an orientation in which the master camera 10 faces the subject, an area AR (remote camera 30) reasonable for a target of a remote operation may be identified. Specifically, the operation control unit 302 may control the state to the first operable state when the azimuth angle is in a predetermined range indicating the first territory 6a side, and the operation control unit 302 may control the state to the second operable state when the azimuth angle is in a predetermined range indicating the second territory 6b side.

### (About process of master camera 10 performed at time of remote photographing according to second modification example)

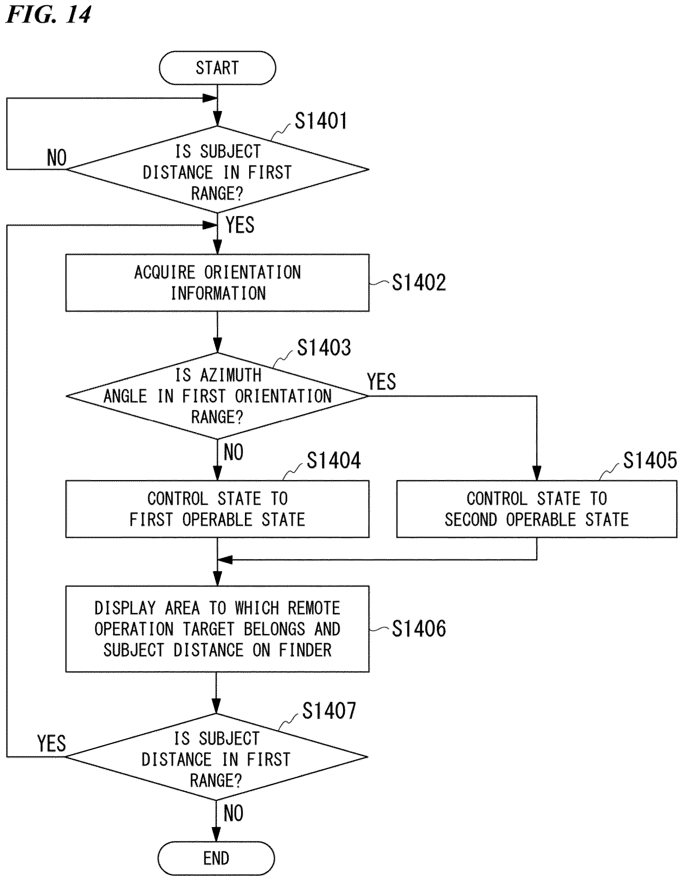

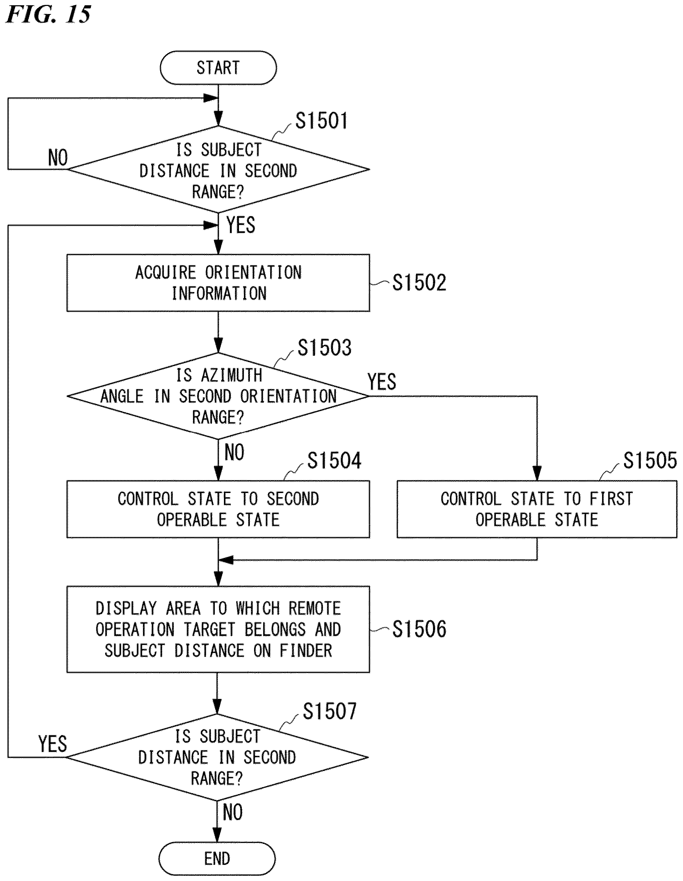

Next, the process of the master camera 10 performed at the time of remote photographing according to the second modification example is described with reference to FIG. 14 and FIG. 15. In FIG. 14 and FIG. 15, the case where the subject distance is in the first range and the case where the subject distance is in the second range are separately described.

### (About process of second modification example performed by master camera 10 when subject distance is in first range)

FIG. 14 is a flow chart showing an example of a process according to the second modification example performed by the master camera 10 when the subject distance is in a first range. In FIG. 14, the master camera 10 determines whether or not the subject distance is in the first range (Step S1401).

The master camera 10 waits until the subject distance is in the first range (Step S1401: NO). When the subject distance is in the first range (Step S1401: YES), the master camera 10 acquires orientation information (Step S1402). In FIG. 14 and FIG. 15, the orientation information is acquired when the subject distance is in the first range or the like; however, the embodiment is not limited thereto. The orientation information may be constantly acquired.

Then, the master camera 10 determines whether or not the azimuth angle indicated by the orientation information is in the first orientation range (Step S1403). When the azimuth angle is not in the first orientation range (Step S1403: NO), the master camera 10 controls the state to the first operable state (Step S1404).

On the other hand, when the azimuth angle is in the first orientation range (Step S1403: YES), the master camera 10 controls the state to the second operable state (Step S1405). That is, the master camera 10 controls the state to the second operable state although the subject distance is in the first range. Then, the master camera 10 displays the area AR to which the remote camera 30 as a remote operation target belongs and the subject distance on the electronic finder 21 (Step S1406).

Next, the master camera 10 determines whether or not the subject distance is in the first range (Step S1407). When the subject distance is in the first range (Step S1407: YES), the master camera 10 returns to Step S1402 and repeats the processes of Step S1402 to Step S1407. On the other hand, when the subject distance is not in the first range (Step S1407: NO), the master camera 10 terminates a sequence of processes.

### (About process of second modification example performed by master camera 10 when subject distance is in second range)

FIG. 15 is a flow chart showing an example of a process according to the second modification example performed by the master camera 10 when the subject distance is in a second range. In FIG. 15, the master camera 10 determines whether or not the subject distance is in the second range (Step S1501).

The master camera 10 waits until the subject distance is in the second range (Step S1501: NO). When the subject distance is in the second range (Step S1501: YES), the master camera 10 acquires orientation information (Step S1502).

Then, the master camera 10 determines whether or not the azimuth angle indicated by the orientation information is in the second orientation range (Step S1503). When the azimuth angle is not in the second orientation range (Step S1503: NO), the master camera 10 controls the state to the second operable state (Step S1504).

On the other hand, when the azimuth angle is in the second orientation range (Step S1503: YES), the master camera 10 controls the state to the first operable state (Step S1505). That is, the master camera 10 controls the state to the first operable state although the subject distance is in the second range. Then, the master camera 10 displays the area AR to which the remote camera 30 as a remote operation target belongs and the subject distance on the electronic finder 21 (Step S1506).

Next, the master camera 10 determines whether or not the subject distance is in the second range (Step S1507). When the subject distance is in the second range (Step S1507: YES), the master camera 10 returns to Step S1502 and repeats the processes of Step S1502 to Step S1507. On the other hand, when the subject distance is not in the second range (Step S1507: NO), the master camera 10 terminates a sequence of processes.

As described above, the master camera 10 according to the second modification example controls the state to the operable state on the basis of the orientation information indicating the orientation in which the master camera 10 faces the subject. Thereby, even when the subject distance is in the first range, since it is possible to control the state to the second operable state in accordance with the azimuth angle of the master camera 10, it is possible to cause an optimum remote camera 30 to capture an image.

Further, if the distance from the master camera 10 to the first area AR1 is similar to the distance from the master camera 10 to the second area AR2, it is possible to cause an optimum remote camera 30 to capture an image in accordance with the azimuth angle.

### (Third modification example)

Next, a third modification example of the first embodiment is described. In the photographing of a soccer, the user Us may want to photograph not only a goal scene but also a friendly goalkeeper who is delighted in his/her own territory or an opponent player who is disappointed in his/her friendly territory 6. That is, even when the state is controlled to the first operable state, depending on the situation, the user Us may want to control the state to the second operable state. Therefore, in the third modification example, a configuration that enables manual switching of the operable state is described.

In the third modification example, the operation unit 25 includes a manual switch button that switches the operable state.

An arbitrary button set in advance can be a manual switch button in the remote photographing mode. Further, by pressing (pressing long) a button that accepts another function in the remote photographing mode for a predetermined period of time or pressing (repeatedly pressing) a button a plurality of times in a predetermined period of time, the manual switching may be accepted. Further, the button assigned as the manual switch button can be an arbitrary button in response to the selection of the user Us. Instead of the manual switch button, the operable state may be set to be switchable by speech recognition.

The mode of manual switching includes four modes as follows.
(1) Switching between the first operable state and the second operable state.
(2) Switching from any one of the first operable state and the second operable state to both operable states.
(3) Switching from both operable states to the first operable state.
(4) Switching from both operable states to the second operable state.

In the third modification example, the cases where (1) and (2) can be performed among the above (1) to (4) are described. For example, each of a manual switch button (first manual switch button) corresponding to (1) and a manual switch button (second manual switch button) corresponding to (2) is assigned in advance. Then, by accepting the pressing of any of the buttons, the manual switching is performed. However, one manual switch button may be assigned in advance. In this case, in accordance with the number of times at which the one manual switch button is pressed, the switching may be performed as (1) → (2) → (1) → (2) → (1) → ... described above.

The same applies to the case where all of the manual switchings (1) to (4) described above are performed. Specifically, each of the manual switch buttons corresponding to (1) to (4) described above may be assigned, and the manual switching may be performed by accepting the pressing of any of the buttons. Further, one manual switch button may be assigned in advance, and in accordance with the number of times at which the one manual switch button is pressed, the switching may be performed as (1) → (2) → (3) → (4) → (1) → ... described above.

### (About manual switching process performed by master camera 10 according to third modification example)

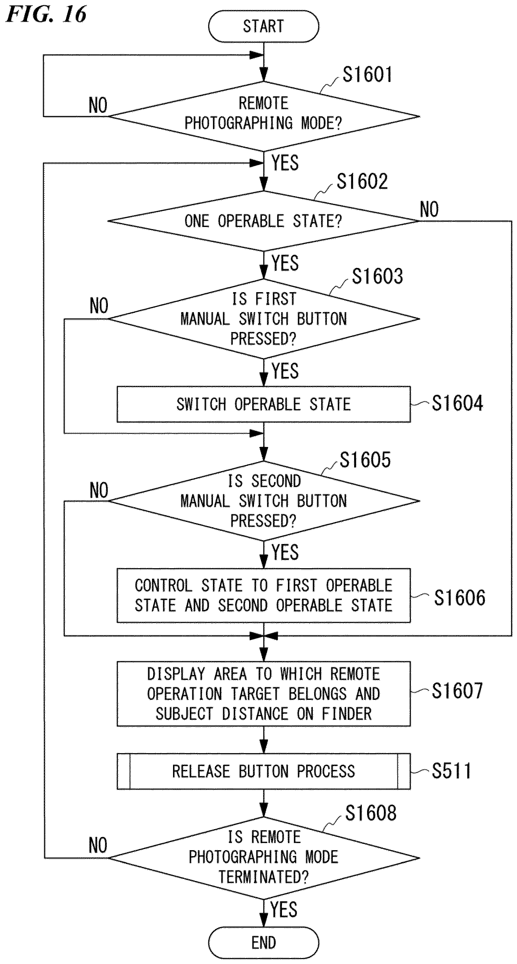

FIG. 16 is a flow chart showing an example of a manual switching process performed by the master camera 10 according to the third modification example. In FIG. 16, descriptions of a control of the operable state are omitted.

In FIG. 16, the master camera 10 determines whether or not the mode is the remote photographing mode (Step S1601). The master camera 10 waits until the mode becomes the remote photographing mode (Step S1601: NO).

When the mode becomes the remote photographing mode (Step S1601: YES), the master camera 10 determines whether or not the state is any one of the first operable state and the second operable state (Step S1602). When the state is not any one of the first operable state and the second operable state (Step S1602: NO), the master camera 10 proceeds to Step S1607. When the state is any one of the first operable state and the second operable state (Step S1602: YES), the master camera 10 determines whether or not the first manual switch button is pressed (Step S1603).

When the first manual switch button is not pressed (Step S1603: NO), the master camera 10 proceeds to Step S1605. When the first manual switch button is pressed (Step S1603: YES), the master camera 10 switches between the first operable state and the second operable state (Step S1604).

Then, the master camera 10 determines whether or not the second manual switch button is pressed (Step S1605). When the second manual switch button is not pressed (Step S1605: NO), the master camera 10 proceeds to Step S1607. When the second manual switch button is pressed (Step S1605: YES), the master camera 10 controls the state to the first operable state and the second operable state (Step S1606).

Then, the master camera 10 displays the area AR to which the remote camera 30 as a remote operation target belongs and the subject distance on the electronic finder 21 (Step S1607). Next, the master camera 10 performs a release button process (refer to FIG. 6) (Step S511). Then, the master camera 10 determines whether or not the remote photographing mode is terminated (Step S1608). When the remote photographing mode is not terminated (Step S1608: NO), the master camera 10 returns to Step S1602 and repeats the processes of Step S1602 to Step S1608. When the remote photographing mode is terminated (Step S1608: YES), the master camera 10 terminates a sequence of processes.

As described above, the master camera 10 according to the third modification example enables the manual switching of the operable state. Thereby, at an arbitrary timing desired by the user Us, the state can be switched to at least one of the first operable state and the second operable state. Thereby, for example, in the photographing of a soccer, the user Us can image not only a goal scene but also a friendly goalkeeper who is delighted in his/her own territory or an opponent player who is disappointed in his/her friendly territory 6 by the remote camera 30. Accordingly, it is possible to perform further suitable imaging using the remote camera 30.

### (Fourth modification example)

Next, a fourth modification example of the first embodiment is described. In the third modification example described above, by pressing the manual switch button, the operable state is switched. In the fourth modification example, instead of or in addition to such a configuration, a configuration that causes the remote camera 30 to perform imaging by a particular signal being input at the time of pressing of the release button 25b is pressed even in a state that is not the operable state is described.

In the fourth modification example, a particular signal (release signal) can be input to the master camera 10. By pressing a particular switch (release switch) connected to the master camera 10, a particular signal is input. The particular switch is connected to a terminal included in the master camera 10 via a predetermined cable. The terminal included in the master camera 10 is, for example, a 10-pin terminal, a USB (Universal Serial Bus) terminal, a HDMI (registered trademark) (High-Definition Multimedia Interface) terminal, or the like.

The state that is not the operable state is a state in which it is impossible to perform the remote operation on the remote camera 30. In the following description, the state that is not the operable state is referred to as an "inoperable state". In the fourth modification example, even in the inoperable state, when the particular signal is input at the time of pressing of the release button, the master camera 10 performs an imaging instruction to the remote camera 30.

### (About release button process performed by master camera 10 according to fourth modification example)

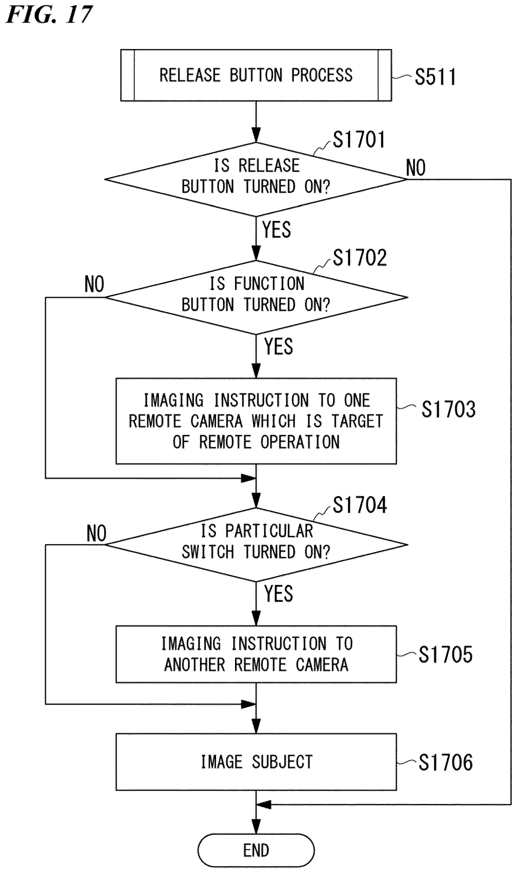

Next, with reference to FIG. 17, the fourth modification example of the release button process shown in Step S511 of FIG. 5 is described.

FIG. 17 is a flow chart showing an example of a release button process performed by the master camera 10 according to the fourth modification example. In FIG. 17, the master camera 10 determines whether or not the release button 25b is turned on (fully pressed) (Step S1701). When the release button 25b is not turned on (Step S1701: NO), the master camera 10 proceeds directly to Step S512 (refer to FIG. 5).

When the release button 25b is turned on (Step S1701: YES), the master camera 10 determines whether or not the function button 25c is turned on (Step S1702). When the function button 25c is not turned on (Step S1702: NO), the master camera 10 proceeds to Step S1704.

On the other hand, when the function button 25c is turned on (Step S1702: YES), that is, when the function button 25c and the release button 25b are turned on simultaneously, the master camera 10 performs the imaging instruction to one remote camera 30 (for example, the first remote camera 30a) that is a target of the remote operation (Step S1703). Thereby, it is possible to cause the one remote camera 30 to image the subject in the imaging region of the one remote camera 30.

Then, the master camera 10 determines whether or not the particular switch is turned on (Step S1704). When the particular switch is not turned on (Step S1704: NO), the master camera 10 proceeds to Step S1706. On the other hand, when the particular switch is turned on (Step S1704: YES), that is, when the particular switch and the release button 25b are turned on simultaneously, the master camera 10 performs the imaging instruction to the other remote camera 30 (for example, the second remote camera 30b) that is not a target of the remote operation (Step S1703). Thereby, it is possible to cause the second remote camera 30b to image the subject in the imaging region of the second remote camera 30b although the state is not controlled to the second operable state.

Then, the master camera 10 images the focused subject (Step S1706) and proceeds to Step S512 (refer to FIG. 5). In the flow chart described above, simultaneous pressing of the function button 25c, the particular switch, and the release button may be accepted. When the simultaneous pressing is received, it is sufficient for the master camera 10 to perform the imaging instruction to both the one remote camera 30 that is a target of the remote operation and the other remote camera 30 that is not a target of the remote operation. In this case, the master camera 10 also performs imaging of a subject by the master camera 10.

As described above, the master camera 10 according to the fourth modification example causes the remote camera 30 to perform imaging by the specific signal being input at the time of pressing of the release button 25b even in the case of the inoperable state. Thereby, even in the case where the state is not the operable state, it is possible to cause the remote camera 30 to capture an image at an arbitrary timing desired by the user Us. Thereby, for example, in the photographing of a soccer, the user Us can image not only a goal scene but also a friendly goalkeeper who is delighted in his/her own territory or an opponent player who is disappointed in his/her friendly territory 6 by the remote camera 30. Accordingly, it is possible to perform further suitable imaging using the remote camera 30.

### (Fifth modification example)

Next, a fifth modification example of the first embodiment is described. In the above embodiment, the imaging system St in which the remote camera 30 is arranged in each of a plurality of areas AR is described. In the fifth modification example, an imaging system St in which one remote camera 30 is arranged is described. The fifth modification example is described using the case where the imaging system St is used for athletics.

### (About imaging system St according to fifth modification example)

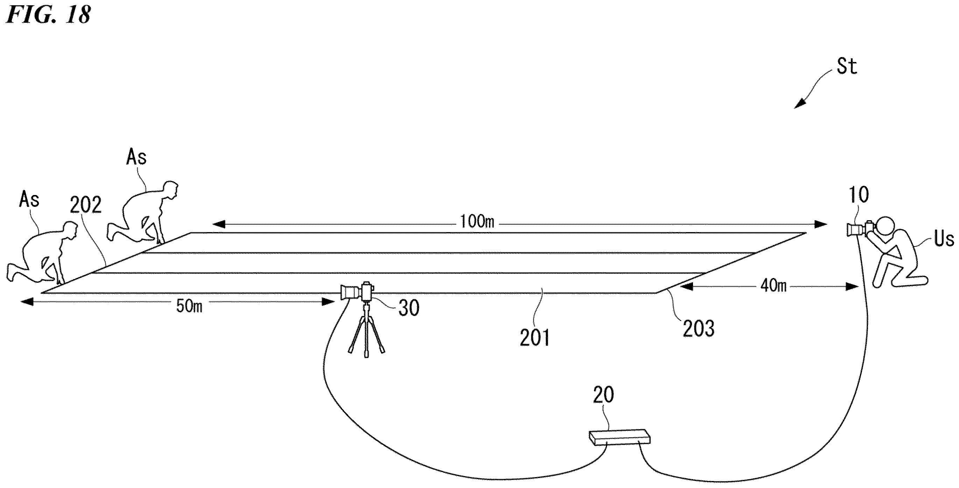

FIG. 18 is an explanatory view showing an example of an imaging system St according to the fifth modification example. In FIG. 18, the imaging system St is a system for imaging an athlete As of a hundred-meter run in the athletics. The athlete As runs from a start line 202 to a finish line 203 in a predetermined lane 201. The user Us who is a photographer is located at a rear position by 40 m of the finish line 203 when seen from the lane 201 and photographs the athlete As as a subject by using the master camera 10. That is, the master camera 10 is arranged at a rear position by 40 m of the finish line 203 when seen from the lane 201.

One remote camera 30 is arranged at an intermediate position (near 50 m) from the start line 202 to the finish line 203 and outside the lane 201. A plurality of remote cameras 30 may be arranged. The master camera 10 can also acquire position information of a position where the remote camera 30 is arranged from a GPS unit included in the remote camera 30. The master camera 10 may calculate and present the distance between the remote camera 30 and the master camera 10 by using the position information of the remote camera 30 and the position information of the master camera 10.

Here, whether or not the operation control unit 302 sets the state to the operable state is determined depending on the range of the subject distance. When seen from the master camera 10, the distance (subject distance) to the athlete As (subject) who is present at the start line 202 is 140 m. Further, the distance (subject distance) to the athlete As (subject) who has run to the vicinity where the remote camera 30 is arranged is 90 m. The remote camera 30 captures an image from the start line 202 to 50 m. Therefore, the operation control unit 302 controls the state to the operable state while the player as the subject runs from the far 140 m to the near 90 m, that is, when the subject distance x is in a range of "90 m < x ≤ 140 m". In order to define these ranges, a threshold value (a first threshold value and a second threshold value) is set. Hereinafter, each threshold value is described.

### (About first threshold value)

The operation control unit 302 controls the state to the operable state when the subject distance does not exceed a first threshold value (upper limit value), that is, when the subject distance is equal to or less than the first threshold value. The first threshold value is, for example, 140 m. The operation control unit 302 controls the state to the operable state when the subject distance does not exceed 140 m. That is, when the athlete As as the subject is located near the start line 202, the operation control unit 302 controls the state to the operable state. On the other hand, the operation control unit 302 does not control the state to the operable state when the subject distance exceeds 140 m, that is, when the athlete As is not located near the start line 202. The first threshold value is not limited to 140 m and may be a value that is larger than 140 m.

### (About second threshold value)

Further, the operation control unit 302 controls the state to the operable state when the subject distance exceeds a second threshold value (lower limit value). The second threshold value is, for example, 90 m. Specifically, the operation control unit 302 controls the state to the operable state when the subject distance exceeds 90 m. On the other hand, the operation control unit 302 does not control the state to the operable state when the subject distance is equal to or less than 90 m, that is, when the player approaches the finish line 203.

By setting the first threshold value and the second threshold value in this way, it is possible to control the state to the operable state when the subject distance x is in the range of "90 m < x ≤ 140 m". In the following description, the range "90 m < x ≤ 140 m" of the subject distance x controlled to the operable state is referred to as a "remote imaging range".

### (About display on electronic finder 21)

In the fifth modification example, the display control unit 305 displays the subject distance, a first object indicating that the state is the operable state, and a second object indicating that the state is not the operable state on the electronic finder 21 of the master camera 10. The display control unit may display at least one of the subject distance, the first object, and the second object on the electronic finder 21.

The first object is, for example, the lighting of a predetermined mark (for example, a circle) in a predetermined color (for example, green). Further, the second object is, for example, the lighting in a color (for example, red) that is different from the predetermined color of the predetermined mark. In the case where the state is not the operable state, the second object may not be displayed.

### (About remote photographing process performed by master camera 10 according to fifth modification example)

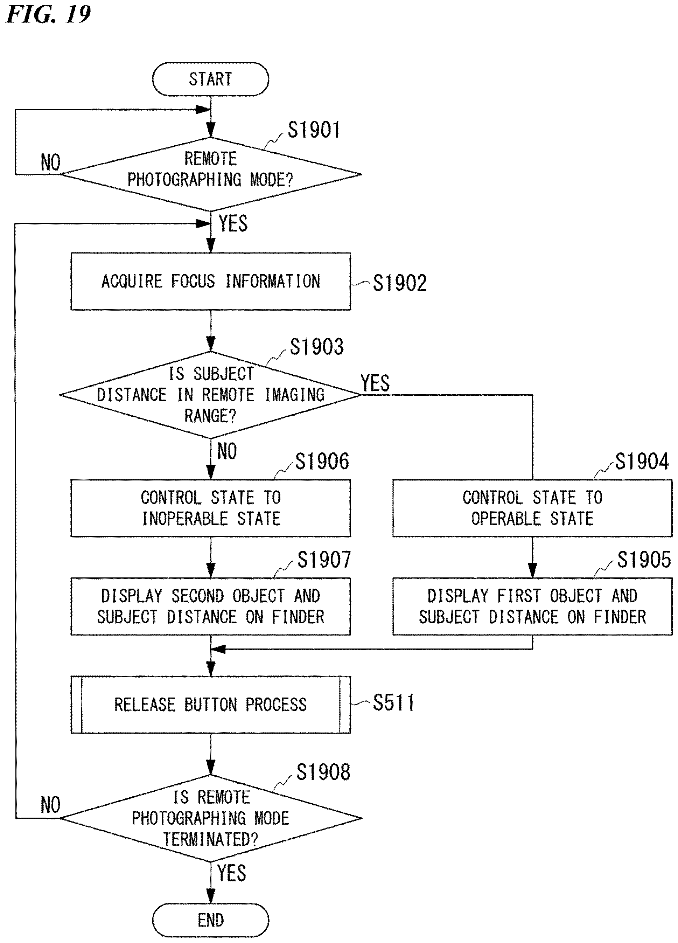

FIG. 19 is a flow chart showing an example of a remote photographing process performed by the master camera 10 according to the fifth modification example. In FIG. 19, the master camera 10 determines whether or not the mode becomes the remote photographing mode relating to the imaging system St (Step S1901).

The master camera 10 waits until the mode becomes the remote photographing mode (Step S1901: NO). When the mode becomes the remote photographing mode (Step S1901: YES), the master camera 10 acquires the focus information (Step S1902). Then, the master camera 10 determines whether or not the subject distance x is in the remote imaging range (90 m < x ≤ 140 m) (Step S1903).

When the subject distance is in the remote imaging range (Step S1903: YES), the master camera 10 controls the state to the operable state (Step S1904). Thereby, the master camera 10 can perform the remote operation on the remote camera 30. Then, the master camera 10 displays the first object and the subject distance on the electronic finder 21 (Step S1905) and proceeds to Step S511.

On the other hand, when the subject distance is not in the remote imaging range (Step S1903: NO), the master camera 10 controls the state to the inoperable state (Step S1906). Then, the master camera 10 displays the second object and the subject distance on the electronic finder 21 (Step S1907). Then, the master camera 10 performs a release button process (refer to FIG. 6) (Step S511). Next, the master camera 10 determines whether or not the remote photographing mode is terminated (Step S1908).

When the remote photographing mode is not terminated (Step S1908: NO), the master camera 10 returns to Step S1902 and repeats the processes of Step S1902 to Step S1908. When the remote photographing mode is terminated (Step S1908: YES), the master camera 10 terminates a sequence of processes.

As described above, the imaging system St according to the fifth modification example can cause one remote camera 30 to capture an image by a remote operation in accordance with the subject distance from the master camera 10 to the subject.

Accordingly, in a hundred-meter run of the athletics, it is possible to cause the remote camera 30 to capture an image with respect to a first half and cause the remote camera 30 not to capture an image with respect to a second half. Thereby, it is possible to prevent the remote camera 30 from capturing an image having a low utility value in the second half, and it is possible to cause the remote camera 30 to perform an optimum imaging.

### (Second embodiment)

Next, a second embodiment is described. In the first embodiment described above, the remote camera 30 is remotely operated by using a single master camera 10. In the second embodiment, instead of or in addition to such a configuration, a configuration in which the remote camera 30 is remotely operated by using a plurality of master cameras 10 (10a, 10b) is described.

### (About imaging system St according to second embodiment)

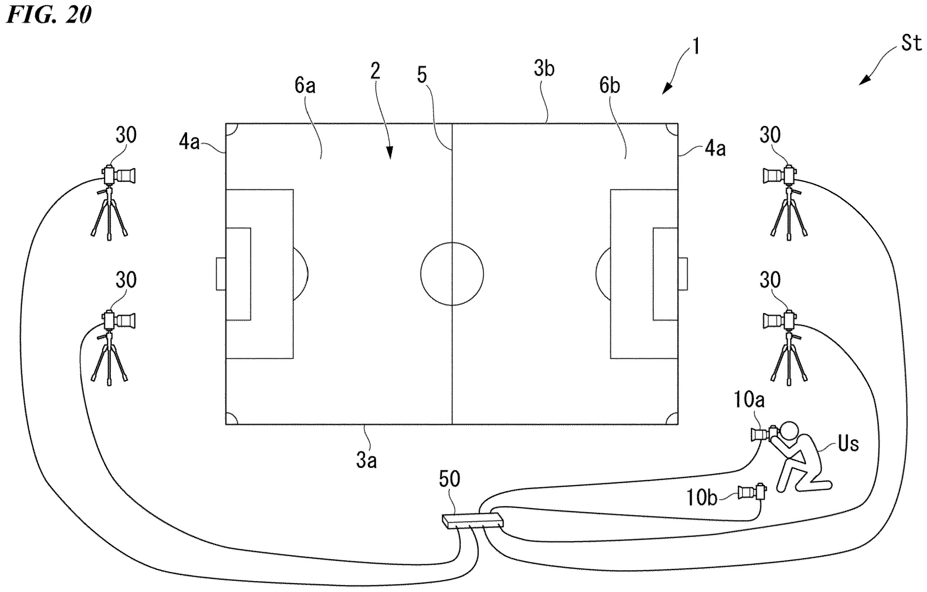

FIG. 20 is an explanatory view showing an example of an imaging system St according to the second embodiment. In FIG. 20, the imaging system St includes a first master camera 10a, a second master camera 10b, and a remote camera 30. The first master camera 10a is, for example, a telephoto camera and images a subject (player) in the first territory 6a. The second master camera 10b is, for example, a wide-angle camera and images a subject in the second territory 6b. For example, the user Us images a player by using the first master camera 10a when the player is playing in the first territory 6a. On the other hand, the user Us images a player by using the second master camera 10b when the player is playing in the second territory 6b.

A plurality of remote cameras 30 are arranged on each of the rear of each goal. The second embodiment is different from the first embodiment in that the remote cameras 30 are not divided into areas. That is, in the second embodiment, a common PIN code is assigned to all of the remote cameras 30.

### (About change of master camera 10 in second embodiment)

The user Us frequently alternately holds the first master camera 10a and the second master camera 10b during a soccer game. Here, the master camera 10 capable of remotely operating the remote camera 30 is a master camera 10 having a control right regarding the remote operation. For example, when the control right is in the first master camera 10a, the remote operation cannot be performed from the second master camera 10b.

Here, in order to change the control right, it is necessary to once disconnect a communication connection between the master camera 10 having the control right and the remote camera 30. Specifically, for example, in order to change the control right from the first master camera 10a to the second master camera 10b, disconnection of all of the communication connections between the first master camera 10a and the remote camera 30 is once required such as turning off the power of the first master camera 10a and turning on the second master camera 10b. Thereby, since a long waiting time is required until the communication is established after disconnection, for example, depending on the performance of the master camera 10, communication environments, or the like, there is a possibility that it is impossible to quickly change the control right, and a photograph desired by user Us cannot be taken.

Therefore, in the present embodiment, it is possible to quickly change the control right. Hereinafter, a functional configuration of the master camera 10 according to the second embodiment is described.

### (Functional configuration of master camera 10 according to second embodiment)

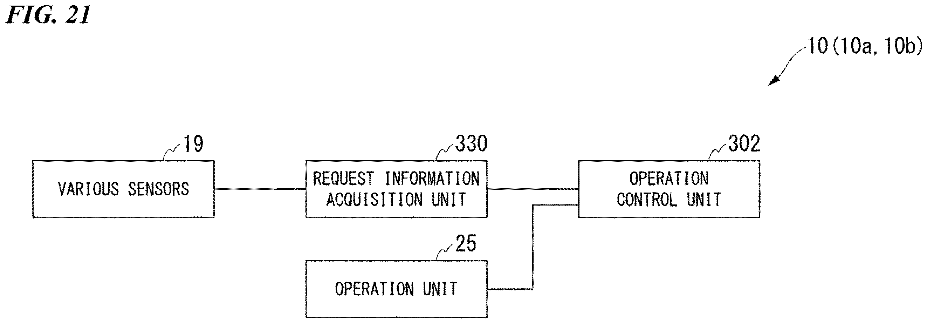

FIG. 21 is an explanatory view showing an example of a functional configuration of a master camera 10 according to the second embodiment. As shown in FIG. 21, the master camera 10 includes a request information acquisition unit 330 and an operation control unit 302. The request information acquisition unit 330 and the operation control unit 302 are realized by the control unit 15 (CPU).

### (About operable state)

The request information acquisition unit 330 acquires request information. The request information is information indicating a request in which one master camera 10 (for example, the first master camera 10a) among the plurality of master cameras 10 performs a remote operation on the remote camera 30.

The operation control unit 302 controls a state to an operable state in which the first master camera 10a is capable of performing a remote operation on the remote camera 30 on the basis of the request information acquired by the request information acquisition unit 330. The operable state is also referred to as a "state having a control right".

Here, both the first master camera 10a and the second master camera 10b are connected (communication connection) to the remote camera 30. However, a master camera 10 capable of performing the remote operation is any one of the first master camera 10a and the second master camera 10b. In other words, any one of the first master camera 10a and the second master camera 10b has the control right to remotely control the remote camera 30.

Further, a priority order of the master camera 10 when connecting to the remote camera 30 is set to the master camera 10. The priority order has, for example, two levels of "high" and "low". For example, in order to change the control right from the second master camera 10b to the first master camera 10a, it is necessary to increase the priority order of the first master camera 10a and connect the first master camera 10a to the remote camera 30. Therefore, when controlling the state to the operable state, the first master camera 10a increases the priority order and performs a connection request to the remote camera 30. Thereby, the control right is transferred from the second master camera 10b to the first master camera 10a. The request information includes information requesting that connection is made by increasing the priority order to be higher than other master cameras 10.

### (About request Information)

The request information includes information in which it can be considered that the user Us is using the master camera 10. Specifically, the request information includes information based on an operation of the operation unit 25 included in each of the plurality of master cameras 10. The request information includes information based on an operation of at least one of a first reception unit which receives setting the state to the operable state and a second reception unit which receives an operation for performing imaging.

The first reception unit is one button set in advance. Hereinafter, the one button is referred to as a "control right switch button". The control right switch button can also be, for example, the function button 25c. That is, the control right switch button and the button for the remote operation can also be the one button. In this case, it is sufficient that by pressing the one button, the switching of the control right is accepted, and by pressing the one button and the release button 25b simultaneously, an imaging instruction to the remote camera 30 is performed.

The control right switch button is not limited to the function button 25c, and it is sufficient that any of the buttons included in the operation unit 25 is assigned as the control right switch button. After receiving the switching of the control right, by pressing the release button 25b, the imaging instruction may be performed to the remote camera 30.

The second reception unit can be a button for receiving an operation for performing imaging, and it is sufficient that, for example, any one of the AF button 25a, the command dial for accepting a change of a shutter speed, a setting button of an aperture value, and the like is assigned as the second reception unit. The button assigned as the first reception unit and the second reception unit can also be an arbitrary button selected by user Us. The control right switch button can be desirably set to a button arranged on a shoulder portion of the master camera 10 such that there is no possibility of coming into contact with another object and being erroneously operated.

The request information includes information based on a detection result of various sensors 19 included in each of the plurality of master cameras 10. It is sufficient that the detection result of various sensors 19 is a detection result by which it can be considered that the user Us is using any of the master cameras 10 and is, specifically, a detection result of at least one of the focusing sensor 19a, the eye sensor 19b, and the inclination sensor 19c. The operation control unit 302 can determine whether or not the user Us has adjusted the focus by using the detection result of the focusing sensor 19a. Further, the operation control unit 302 can determine whether or not the user Us has looked into the electronic finder 21 by using the detection result of the eye sensor 19b. Further, the operation control unit 302 can determine whether or not the user Us has held the master camera 10 by using the detection result of the inclination sensor 19c.

Depending on the user Us, it may be also desired to switch the control right only by an operation of any one of the buttons or only by any one of the sensors. For example, depending on the user Us, it may be also desired to switch the control right only by an operation of the control right switch button. In this case, it is sufficient that the operation control unit 302 controls the state to the operable state only on the basis of the operation of the control right switch button. That is, it is sufficient that the operation control unit 302 does not control the state to the operable state on the basis of an operation of another button other than the control right switch button or the detection result of various sensors 19. Thereby, the user Us can consciously perform the switching of the control right by a button operation. Further, a button or a sensor for switching the control right can be arbitrarily set in accordance with the selection of the user.

Further, the request information includes information based on a power of any of the plurality of master cameras 10 being turned on. For example, in a state where the control right is in the second master camera 10b, the power of the first master camera 10a is turned on. In this case, when it can be considered that the second master camera 10b is in use, the second master camera 10b holds the control right. On the other hand, when it can be considered that the second master camera 10b is not in use, the control right is transferred to the first master camera 10a, that is, the first master camera 10a obtains the control right.

### (About inoperable state)

In the present embodiment, the master camera 10 does not hold the control right of the master camera 10 by another master camera 10 obtaining the control right. More specifically, by another master camera (for example, the second master camera 10b) among the plurality of master cameras 10 that is different from one master camera 10 (for example, the first master camera 10a) becoming in the operable state, the operation control unit 302 controls the state to the inoperable state in which the remote operation of the first master camera 10a is impossible. The inoperable state is also referred to as a "state having no control right".

However, the master camera 10 may hold the control right even when another master camera 10 tries to obtain the control right. Specifically, for example, when the operation of the operation unit 25 included in the first master camera 10a is continued, the operation control unit 302 does not control the first master camera 10a to be in the inoperable state by the operation of the operation unit 25 included in the second master camera 10b.

Further, when it can be considered that the user Us is using a master camera 10 having the control right, even when it can be considered that the user Us is using a master camera 10 having no control right, the operation control unit 302 holds the control right of the master camera 10 having the control right. Specifically, for example, when the detection of at least one of the focusing sensor 19a, the eye sensor 19b, and the inclination sensor 19c included in the first master camera 10a is continued, the operation control unit 302 does not control the first master camera 10a to be in the inoperable state by the detection of at least one of the focusing sensor 19a, the eye sensor 19b, and the inclination sensor 19c included in the second master camera 10b.

### (About display on electronic finder 21)

The display control unit 305 displays at least one of an object indicating that the state is the operable state and an object indicating that the state is the inoperable state on the electronic finder 21 of the master camera 10. The object indicating that the state is the operable state is the lighting of a predetermined mark (for example, a circle) in a predetermined color (for example, green). Further, the object indicating that the state is the inoperable state is, for example, the lighting in a color (for example, red) that is different from the predetermined color of the predetermined mark. Only the object indicating that the state is the operable state may be capable of being displayed, and when the state is the inoperable state, the object indicating that the state is the operable state may not be displayed.

### (About protocol)

The master camera 10 and the remote camera 30 are connected by the TCP/IP (Transmission Control Protocol / Internet Protocol) and the PTP/IP (Picture Transfer Protocol / Internet Protocol). The TCP/IP is a communication protocol used in the Internet. The PTP/IP is an extended specification of the PTP (Picture Transfer Protocol) which is a protocol for transferring a digital image and is a standard for transferring image data through the LAN. In the present embodiment, connection of a communication relating to the switching of the control right refers to a state in which both the TCP/IP and the PTP/IP are connected, and disconnection of a communication relating to the switching of the control right refers to a state in which the PTP/IP is disconnected and the TCP/IP is connected.

### (About change of control right of master camera 10)

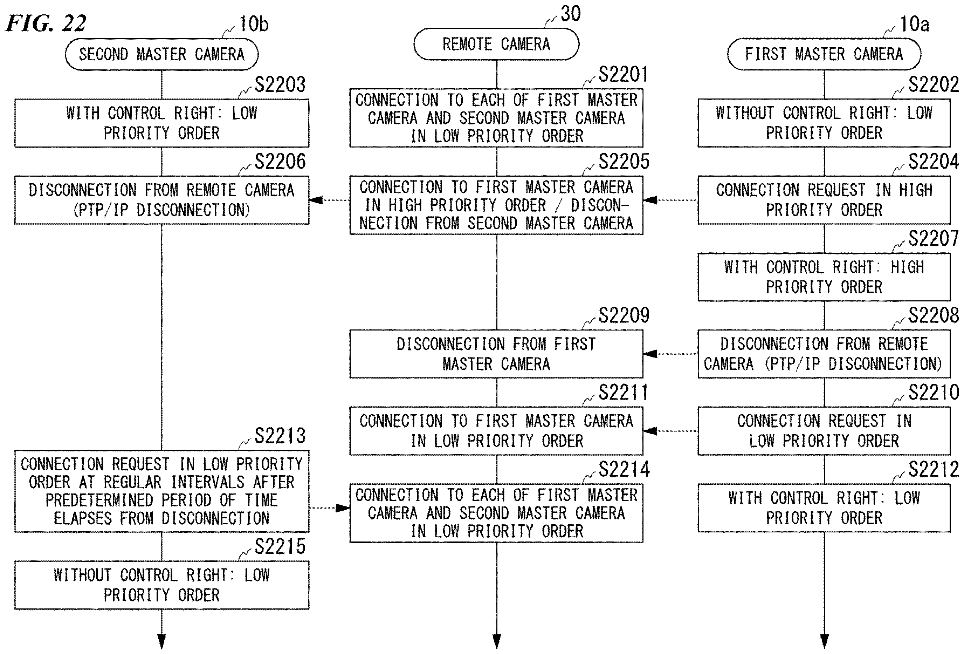

FIG. 22 is a sequence view showing a basic flow when changing a control right of the master camera 10. In FIG. 22, the case where the control right is changed from the second master camera 10b to the first master camera 10a is described. In FIG. 22, as a precondition, the remote camera 30 is connected (communication connection) to each of the first master camera 10a and the second master camera 10b in the same priority order (low priority order) (Step S2201). In Step S2201, each of the master cameras 10 is connected to the remote camera 30 by the TCP/IP and the PTP/IP. Further, the second master camera 10b has the control right (Step S2202), and the first master camera 10a does not have the control right (Step S2203).

In this state, when acquiring the request information, for example, by the control right switch button being pressed, the first master camera 10a increases the priority order and performs a connection request to the remote camera 30 (Step S2204). When receiving the connection request from the first master camera 10a, the remote camera 30 increases the priority order with the first master camera 10a, is connected to the first master camera 10a, and disconnects the connection with the second master camera 10b (Step S2205). Thereby, the second master camera 10b disconnects the communication with the remote camera 30 (Step S2206). In Step S2206, between the second master camera 10b and the remote camera 30, the PTP/IP is disconnected, and the TCP/IP is connected.

Then, the first master camera 10a obtains the control right of the remote camera 30 and is connected to the remote camera 30 in the high priority order (Step S2207). Here, if the first master camera 10a continues to be connected in the high priority order, the second master camera 10b cannot obtain the control right again. Therefore, the first master camera 10a once disconnects the connection with the remote camera 30 after obtaining the control right (Step S2208). Thereby, the remote camera 30 disconnects the connection with the first master camera 10a (Step S2209). In Step S2209, between the first master camera 10a and the remote camera 30, the PTP/IP is disconnected, and the TCP/IP is connected.

When the first master camera 10a disconnects the connection with the remote camera 30, the first master camera 10a decreases the priority order and performs a connection request to the remote camera 30 (Step S2210). When the remote camera 30 receives the connection request from the first master camera 10a, the remote camera 30 decreases the priority order with the first master camera 10a and is connected to the first master camera 10a (Step S2211). Thereby, the first master camera 10a is connected to the remote camera 30 in a low priority order in a state where the control right is obtained (Step S2212).

Here, when the PTP/IP with the remote camera 30 is disconnected or when both the PTP/IP and the TCP/IP are disconnected, by performing a connection request at regular intervals, the master camera 10 enables reconnection even if temporary disconnection occurs. Therefore, if the second master camera 10b performs the connection request immediately after the disconnection in Step S2206, the connection request of the PTP/IP may be accidentally performed prior to the first master camera 10a. Thereby, the second master camera 10b may accidentally obtain the control right, and the first master camera 10a may not be able to obtain the control right.

Therefore, after a predetermined period of time elapses from the disconnection in Step S2206, the second master camera 10b performs a connection request in a low priority order at regular intervals (Step S2213). Thereby, the second master camera 10b is prevented from accidentally obtaining the control right. In Step S2205, when the remote camera 30 disconnects the PTP/IP with the second master camera 10b, it is sufficient that the remote camera 30 transmits information indicating that the second camera 10b waits for a predetermined period of time before performing the connection request to the second master camera 10b. Thereby, the second master camera 10b can determine whether the disconnection in Step S2206 is a disconnection for the first master camera 10a to obtain the control right or is a disconnection for other reasons such as a communication failure.

When both the first master camera 10a and the second master camera 10b can obtain the control right, each master camera 10 may be set so as not to perform the connection with the remote camera 30 at regular intervals. Thereby, it is possible to prevent the control right of one master camera 10 from being accidentally taken by another master camera 10.

Next, the remote camera 30 is connected to each of the first master camera 10a having the control right and the second master camera 10b having no control right at the same priority order (low priority order) (Step S2214, Step S2215). Thereby, each of both master cameras 10 is connected to the remote camera 30 by the TCP/IP and the PTP/IP.

When the control right is switched from the first master camera 10a to the second master camera 10b, it is sufficient that the processes performed by each master camera 10 are switched. That is, it is sufficient that the processes described above performed by the second master camera 10b are performed by the first master camera 10a, and the processes described above performed by the first master camera 10a are performed by the second master camera 10b. Thereby, the control right can be mutually switched between the first master camera 10a and the second master camera 10b.

According to the flow chart described above, the user Us can simply and instantaneously switch the control right to the master camera 10 that is being held, for example, only by pressing the control right switch button. Further, since part (PTP/IP) of the protocols is disconnected and connected, and the connection state is maintained with respect to another part (TCP/IP) of the protocols, regardless of the performance of the master camera 10, communication environments, or the like, when switching the control right of the master camera 10 again, it is possible to quickly perform the switching.

### (About process at time of power-on performed by master camera 10 according to second embodiment)

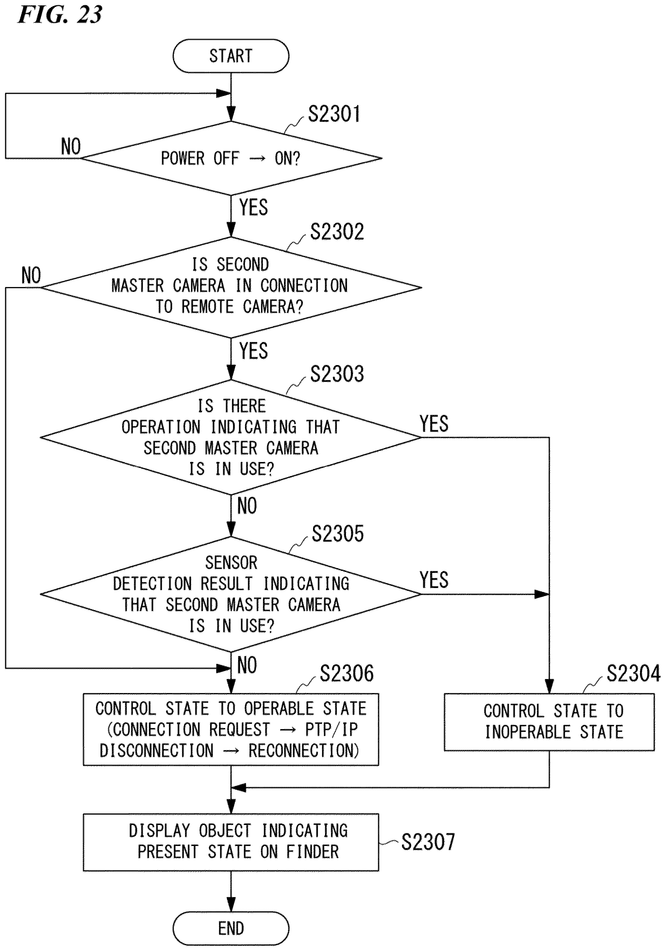

FIG. 23 is a flow chart showing an example of a process at the time of power-on performed by the master camera 10 according to the second embodiment. FIG. 23 is described using an example in which the first master camera 10a mainly performs the process. In FIG. 23, the first master camera 10a determines whether or not the power is turned on from the off-state (Step S2301). When the power is in the off-state, both the TCP/IP and the PTP/IP are in a disconnected state. The first master camera 10a waits until the power is turned on from the off-state (Step S2301: NO).

When the power is turned on from the off-state (Step S2301: YES), the first master camera 10a starts connection of the TCP/IP and the PTP/IP to the remote camera 30 and determines whether or not the second master camera 10b is connected to the remote camera 30 (Step S2302). When the second master camera 10b is not connected to the remote camera 30 (Step S2302: NO), that is, for example, when the power of the second master camera 10b is in the off-state, the first master camera 10a proceeds to Step S2306.

On the other hand, when the second master camera 10b is connected to the remote camera 30 (Step S2302: YES), the first master camera 10a determines whether or not there is an operation indicating an in-use state in the second master camera 10b (Step S2303). The operation indicating the in-use state includes at least one of an operation accepting that the state is set to the operable state in the second master camera 10b and an operation for performing imaging. When there is an operation indicating the in-use state in the second master camera 10b (Step S2303: YES), the first master camera 10a controls the state to the inoperable state (Step S2304) and proceeds to Step S2307.

On the other hand, when there is not an operation indicating the in-use state in the second master camera 10b (Step S2303: NO), the first master camera 10a determines whether or not a sensor detection result indicating the in-use state is obtained in the second master camera 10b (Step S2305). The sensor detection result indicating the in-use state includes a detection result of at least one of the focusing sensor 19a, the eye sensor 19b, and the inclination sensor 19c included in the second master camera 10b. When the sensor detection result indicating the in-use state is obtained in the second master camera 10b (Step S2305: YES), the first master camera 10a proceeds to Step S2304 and controls the state to the inoperable state.

On the other hand, when the sensor detection result indicating the in-use state is not obtained in the second master camera 10b (Step S2305: NO), the first master camera 10a controls the state to the operable state (Step S2306). In Step S2306, a connection request is performed to the remote camera 30 in a high priority order, and then, by once disconnecting the connection of the PTP/IP and performing a connection request again in a low priority order, reconnection with the remote camera 30 is performed in a low priority order.

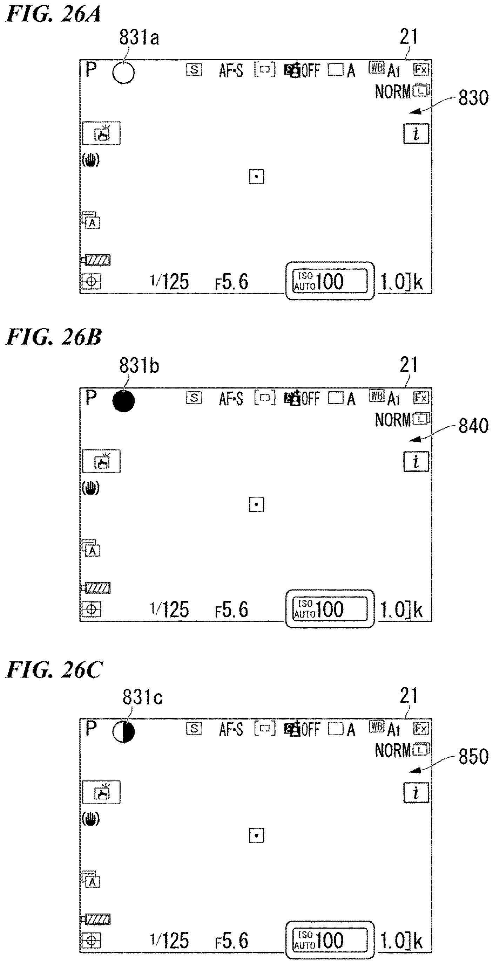

Then, the first master camera 10a displays an object indicating the present connection state with the remote camera 30 on the electronic finder 21 (Step S2307) and terminates a sequence of processes. An example of a display on the electronic finder 21 will be described later with reference to FIGS. 26A to 26C.

According to the process described above, the first master camera 10a can be connected to the remote camera 30 at the time of power-on.

### (About remote photographing process performed by master camera 10 according to second embodiment)

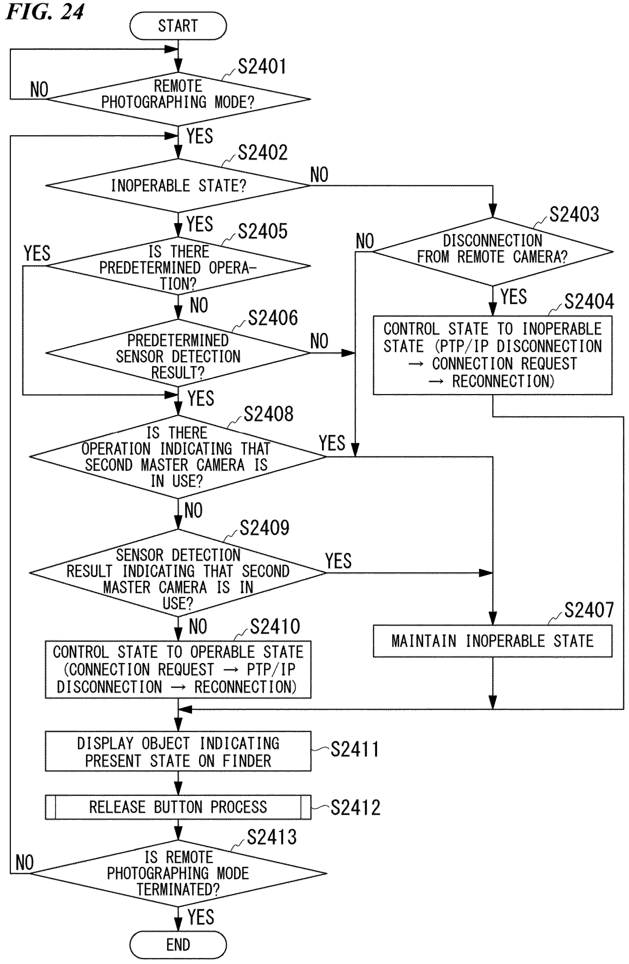

FIG. 24 is a flow chart showing an example of a remote photographing process performed by the master camera 10 according to the second embodiment. In FIG. 24, processes performed by first master camera 10a other than a process when the power is turned on is described.

In FIG. 24, the first master camera 10a determines whether or not the mode becomes the remote photographing mode relating to the imaging system St (Step S2401). The first master camera 10a waits until the mode becomes the remote photographing mode (Step S2401: NO). When the mode becomes the remote photographing mode (Step S2401: YES), the first master camera 10a determines whether or not the state is the inoperable state (no control right) (Step S2402).

When the state is not the inoperable state (Step S2402: NO), that is, when the state is the operable state (when there is a control right), the first master camera 10a determines whether or not the connection of the PTP/IP between the first master camera 10a and the remote camera 30 is disconnected in association with the second master camera 10b obtaining the control right (Step S2403).

When the connection of the PTP/IP with the remote camera 30 is not disconnected (Step S2403: NO), the first master camera 10a proceeds to Step S2407. On the other hand, when the connection of the PTP/IP with the remote camera 30 is disconnected (Step S2403: YES), the first master camera 10a controls the state to the inoperable state (Step S2404), that is, the control right is lost, and the first master camera 10a proceeds to Step S2411. In Step S2404, after a predetermined period of time elapses since the connection of the PTP/IP with the remote camera 30 is disconnected, a connection request in a low priority order is performed at regular intervals, and reconnection with the remote camera 30 is performed in a low priority order.

In Step S2402, when the state is the inoperable state (Step S2402: YES), that is, when there is no control right, the first master camera 10a determines whether or not there is a predetermined operation (Step S2405). The predetermined operation includes at least one of an operation setting the state to the operable state and an operation for performing imaging. When there is the predetermined operation (Step S2405: YES), the first master camera 10a proceeds to Step S2408.

On the other hand, when there is not the predetermined operation (Step S2405: NO), the first master camera 10a determines whether or not a predetermined sensor detection result is obtained (Step S2406). The predetermined sensor detection result includes a detection result of at least one of the focusing sensor 19a, the eye sensor 19b, and the inclination sensor 19c. When the predetermined sensor detection result is not obtained (Step S2406: NO), the first master camera 10a proceeds to Step S2411 while maintaining the inoperable state (Step S2407), that is, without obtaining the control right.

On the other hand, when the predetermined sensor detection result is obtained (Step S2406: YES), the first master camera 10a determines whether or not there is an operation indicating an in-use state in the second master camera 10b (Step S2408). When there is an operation indicating the in-use state in the second master camera 10b (Step S2408: YES), the first master camera 10a proceeds to Step S2407 and maintains the inoperable state.

On the other hand, when there is not an operation indicating the in-use state in the second master camera 10b (Step S2408: NO), the first master camera 10a determines whether or not a sensor detection result indicating the in-use state is obtained in the second master camera 10b (Step S2409). When the sensor detection result indicating the in-use state is obtained in the second master camera 10b (Step S2409: YES), the first master camera 10a proceeds to Step S2407 and maintains the inoperable state.

On the other hand, when the sensor detection result indicating the in-use state is not obtained in the second master camera 10b (Step S2409: NO), the first master camera 10a controls the state to the operable state (Step S2410). In Step S2410, a connection request is performed to the remote camera 30 in a high priority order, and then, by once disconnecting the connection of the PTP/IP and performing a connection request again in a low priority order, reconnection with the remote camera 30 is performed in a low priority order.

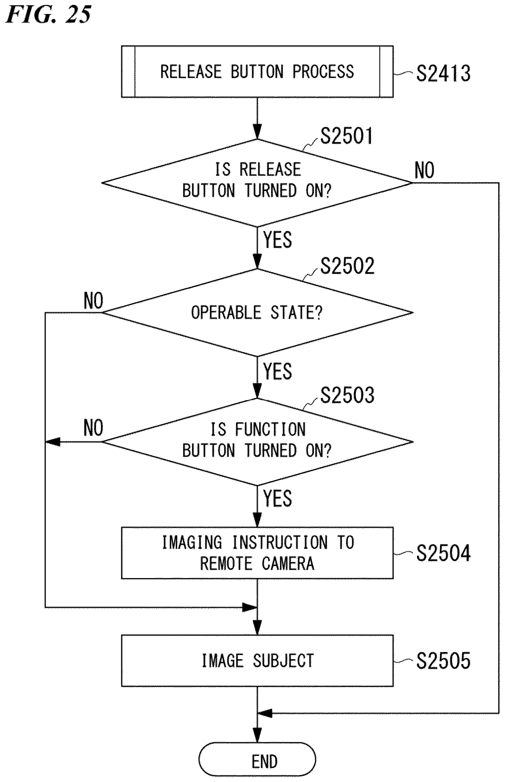

Then, the first master camera 10a displays an object indicating the present connection state with the remote camera 30 on the electronic finder 21 (Step S2411). Next, the first master camera 10a performs a release button process (refer to FIG. 25)

### (Step S2412).

Then, the master camera 10 determines whether or not the remote photographing mode is terminated (Step S2413). When the remote photographing mode is not terminated (Step S2413: NO), the master camera 10 returns to Step S2402 and repeats the processes of Step S2402 to Step S2413. When the remote photographing mode is terminated (Step S2413: YES), the master camera 10 terminates a sequence of processes.

### (About release button process according to second embodiment)

FIG. 25 is a flow chart showing an example of a release button process performed by the master camera 10 according to the second embodiment. In FIG. 25, the first master camera 10a determines whether or not the release button 25b is turned on (fully pressed) (Step S2501). When the release button 25b is not turned on (Step S2501: NO), the first master camera 10a proceeds directly to Step S2413 (refer to FIG. 24).

When the release button 25b is turned on (Step S2501: YES), the first master camera 10a determines whether or not the state is the operable state (Step S2502). When the state is not the operable state (Step S2502: NO), that is, when there is not the control right, the first master camera 10a proceeds to Step S2505. On the other hand, when the state is the operable state (Step S2502: YES), that is, when there is the control right, the first master camera 10a determines whether or not the function button 25c (button for the remote operation) is turned on (Step S2503). The state in which the function button 25c is turned on also includes a state in which the function button 25c is pressed half.

When the function button 25c is not turned on (Step S2503: NO), that is, when only the release button 25b is turned on, the first master camera 10a proceeds to Step S2505. On the other hand, when the function button 25c is turned on (Step S2503: YES), that is, when the function button 25c and the release button 25b are turned on simultaneously, the first master camera 10a performs the imaging instruction to the remote camera 30 (Step S2504). Thereby, it is possible to cause the remote camera 30 to image the subject in the imaging region. Then, the first master camera 10a images the focused subject (Step S2505) and proceeds to Step S2413 (refer to FIG. 24).

### (Screen example of second embodiment displayed on electronic finder 21)

FIGS. 26A to 26C are explanatory views showing an example of a screen of the second embodiment displayed on the electronic finder 21. In FIGS. 26A, 26B, 26C, finder screens 830, 840, 850 are displayed on the electronic finder 21. Various kinds of information are displayed on the finder screens 830, 840, 850. In the second embodiment, the finder screens 800, 810 include an object 831 (831a, 831b, 831c).

An object 831a in FIG. 26A indicates that the state is the operable state. An object 831b in FIG. 26B indicates that the state is the inoperable state. An object 831c in FIG. 26C indicates a state in which the connection of the PTP/IP with part of the remote cameras 30 is not established although the state is the operable state. For example, the object 831a is displayed in green, the object 831b is displayed in red, and the object 831c is displayed by a combination of a red semicircle and a green semicircle; however, the embodiment is not limited to this form.

By displaying such an object 831, the user Us can confirm whether or not the state is the operable state and the connection state of the PTP/IP in the operable state while looking into the electronic finder 21.

As described above, the master camera 10 according to the second embodiment acquires request information and controls the state to an operable state in which a remote operation can be performed on the remote camera 30 on the basis of the acquired request information. That is, the master camera 10 performs the connection by increasing the priority order and thereby obtains the control right. Thereby, when obtaining the control right, without turning on the power of a master camera 10 having no control right or disconnecting all of the connections with the master cameras 10 having the control right, it is possible to quickly switch the control right. Accordingly, it is possible to perform suitable imaging using the remote camera 30 by using the master camera 10 held by the user Us.

Further, the first master camera 10a according to the second embodiment controls the state to the inoperable state in which the remote operation of the first master camera 10a is impossible by the second master camera 10b being in the operable state. Thereby, only one master camera 10 can obtain the control right among the plurality of master cameras 10. Accordingly, even if there is an unintended operation in a master camera 10 that is not used, it is possible to prevent the control right from being transferred to the master camera 10. Thereby, it is possible to prevent the remote camera 30 from capturing an image having low utility value. Further, even if the user Us frequently alternately holds the first master camera 10a and the second master camera 10b in order to image a soccer player or the like, it is possible to cause the remote camera 30 to efficiently capture an image.

Further, in the second embodiment, the request information is information based on an operation of at least one of the operation unit 25 (control right switch button) which receives setting the state to the operable state and the operation unit 25 (for example, the AF button 25a) which receives an operation for performing imaging, which are included in the master camera 10. Thereby, only by operating the operation unit 25 of a master camera 10 held by the user Us, it is possible to transfer the control right to the master camera 10. That is, it is possible to easily switch between the control right of the first master camera 10a and the control right of the second master camera 10b.

Further, in the second embodiment, when the operation unit 25 of one master camera 10 having the control right is operated, even if the operation unit of another master camera 10 having no control right is operated, the control right is not changed. Specifically, for example, when the operation of the operation unit 25 of the first master camera 10a is continued, by the operation of the operation unit 25 of the second master camera 10b, the state is not controlled to the inoperable state in which the remote operation of the first master camera 10a is impossible. Thereby, for example, even if the function button 25c of a second master camera 10b that is not in use is unintentionally pressed, it is possible to maintain the control right of the first master camera 10a in use. Accordingly, it is possible to prevent the change of the control right which the user Us does not intend.

Further, in the second embodiment, the request information is information based on the detection result of at least one of the focusing sensor 19a, the eye sensor 19b, and the inclination sensor 19c which are included in each of the master cameras 10. Thereby, even if the user Us does not perform an operation relating to the switching of the control right, it is possible to transfer the control right to any of the master cameras 10 that can be considered to be in use.

Further, in the second embodiment, when the detection of at least one of the focusing sensor 19a, the eye sensor 19b, and the inclination sensor 19c included in the first master camera 10a is continued, by the detection of at least one of the focusing sensor 19a, the eye sensor 19b, and the inclination sensor 19c included in the second master camera 10b, the state is not controlled to the inoperable state in which the remote operation of the first master camera 10a is impossible. Thereby, for example, even if a detection result is unintentionally obtained in a second master camera 10b that is not in use, it is possible to maintain the control right of the first master camera 10a in use. Accordingly, it is possible to prevent the switching of the control right which the user Us does not intend.

Further, in the second embodiment, the request information is information based on the power of any of the plurality of master cameras 10 being turned on. Thereby, when the power of a master camera 10 is turned on, even if the user Us does not perform an operation relating to the switching of the control right, it is possible to transfer the control right to the master camera 10.

### (Modification example of second embodiment)

Next, a modification example of the second embodiment is described. The above second embodiment is described using a configuration in the which the master camera 10 having no control right does not perform the imaging instruction. The modification example of the second embodiment is described using a configuration in which, regardless of the presence or absence of the control right, the imaging instruction can be performed from any of the master cameras 10, and whether or not the imaging based on the imaging instruction can be determined on the remote camera 30 side.

In the second modification example, any of the plurality of master cameras 10 can perform an imaging instruction. However, only one master camera 10 has the control right. The remote camera 30 determines whether or not the master camera 10 that becomes a transmission source of the imaging instruction is a master camera 10 having the control right or a master camera 10 having no control right. In this determination, the remote camera 30 determines a master camera 10 with which the connection of the PTP/IP is first performed as the master camera 10 having the control right.

The determination of the control right is specifically described. For example, in order to switch the control right, if the connection of the PTP/IP with the first master camera 10a having the control right is disconnected, the control right is transferred to the connected second master camera 10b. Further, after the disconnection, the first master camera 10a is connected to the remote camera 30 again. By performing this series of switching operations, the connection of the PTP/IP of the second master camera 10b is performed prior to the first master camera 10a. Accordingly, on the remote camera 30 side, it is determined that a master camera 10 (a master camera that is continuously connected for a longer period of time) which has performed the connection of the PTP/IP first is the master camera 10 having the control right.

When receiving the imaging instruction from the master camera 10 having the control right, the remote camera 30 performs imaging. On the other hand, when receiving the imaging instruction from the master camera 10 having no control right, the remote camera 30 discards the imaging instruction and does not perform imaging.

As described above, according to the modification example of the second embodiment, the remote camera 30 can determine the switching of the control right of the master camera 10. In this way, it is also possible to quickly switch the control right of the master camera 10. Accordingly, it is possible to perform suitable imaging using the remote camera 30 by using the master camera 10 held by the user Us.

### (Third embodiment)

Next, a third embodiment is described. In the third embodiment, a configuration in which the first embodiment and the second embodiment are combined is described.

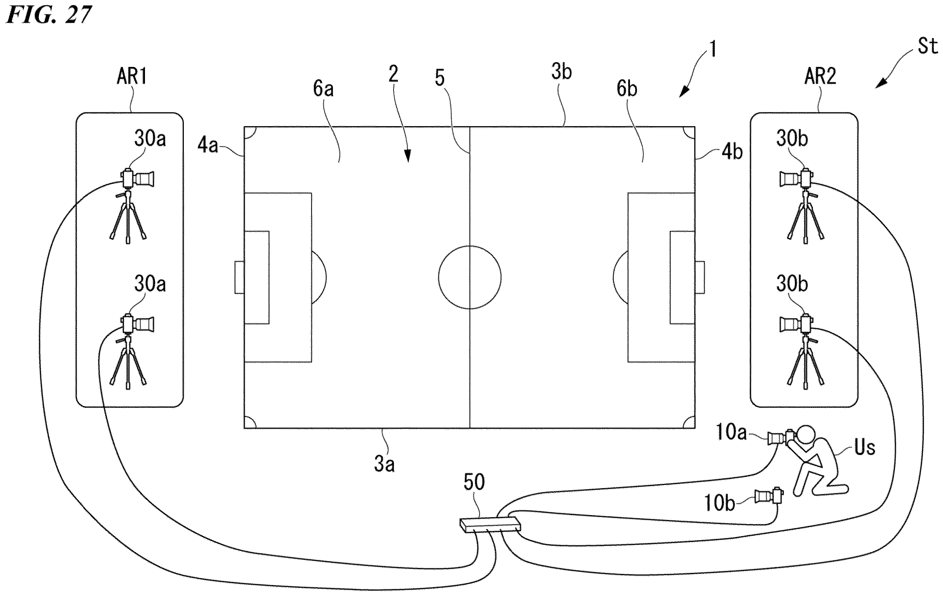

FIG. 27 is an explanatory view showing an example of an imaging system St according to the third embodiment. As shown in FIG. 27, in the third embodiment, a configuration is described in which the first remote camera 30a and the second remote camera 30b are divided into areas, and the master camera 10 is arranged in a plurality of areas AR.

### (About setting of remote camera 30 in each area AR)

Each of the setting unit 304 included in the first master camera 10a and the setting unit 304 included in the second master camera 10b sets the remote camera 30 in each area AR. Specifically, each setting unit 304 sets the first remote camera 30a arranged in the first area AR1. Further, each setting unit 304 sets the second remote camera 30b arranged in the second area AR2.

Each setting unit 304 can switch between the first remote camera 30a set in the first area AR1 and the second remote camera 30b set in the second area AR2. That is, each setting unit 304 can set the second remote camera 30b in the first area AR1 and can set the first remote camera 30a in the second area AR2.

### (About threshold value)

Whether or not the operation control unit 302 sets the state to the operable state is determined depending on the range of the subject distance.

The range of the subject distance when the control of the first operable state is performed may be a different range between the first master camera 10a and the second master camera 10b. Similarly, the range of the subject distance when the control of the second operable state is performed may be a different range between the first master camera 10a and the second master camera 10b.

As an example, with respect to the first master camera 10a, the state may be controlled to the second operable state when the subject distance x is in the range of "5 m < x ≤ 40 m", and the state may be controlled to the first operable state when the subject distance x is in the range of "60 m < x ≤ 100 m". On the other hand, with respect to the second master camera 10b, the state may be controlled to the second operable state when the subject distance x is in the range of "0 m < x ≤ 30 m", and the state may be controlled to the first operable state when the subject distance x is in the range of "40 m < x ≤ 100 m". The range of the subject distance setting the state to the first operable state and the range of the subject distance setting the state to the second operable state can be a range in accordance with the set threshold value (the first threshold value and the second threshold value).

The range (first range) of the subject distance setting the state to the first operable state may be the same range between the first master camera 10a and the second master camera 10b. Similarly, the range (second range) of the subject distance setting the state to the second operable state may be the same range between the first master camera 10a and the second master camera 10b. The range of the subject distance when performing the control of the first operable state and the range of the subject distance when performing the control of the second operable state may partially overlap each other.

As described above, the imaging system St according to the third embodiment divides the first remote camera 30a and the second remote camera 30b into areas and arranges the master camera 10 in a plurality of areas AR. Thereby, it is possible to cause the remote camera 30 to capture an image by the remote operation in accordance with the subject distance from the master camera 10 having the control right while quickly changing the control right.

Further, by pressing the control right switch button or the like, it is possible to change the control right, and by pressing the function button 25c and the release button 25b simultaneously, it is possible to cause the remote camera 30 to capture an image. Accordingly, by a simple operation, it is possible to perform the change of the control right and the imaging by the remote camera 30. In this way, according to the third embodiment, it is possible to perform suitable imaging using the remote camera 30.

In the above description, the control unit 15 (imaging control device) is included in the master camera 10; however, the embodiment is not limited thereto. For example, the control unit 15 may be included in the remote camera 30 or may be included in an external device (for example, an external server). Specifically, each functional unit (the distance information acquisition unit 301, the operation control unit 302, the position information acquisition unit 303, the setting unit 304, the display control unit 305, the subject information acquisition unit 310, the orientation information acquisition unit 320, the request information acquisition unit 330) is not limited to being included in the master camera 10 and may be included in the remote camera 30 or an external server. That is, for example, the master camera 10 may operate based on an instruction from an external device. Further, all of the functional units described above are not limited to be included in one device. For example, part of the functional units may be included in one device, and other functional units excluding part of the functional units may be included in another device. Further, in the above description, the relay device 50 is described as a device independent from the master camera 10 and the remote camera 30 but may be included in any of the master camera 10 and the remote camera 30.

In the above description, the operation control unit 302 controls the state to the first operable state when the subject distance is in the first range; however, when the subject distance is in the first range, the operation control unit 302 may control the state to the first operable state and the second operable state simultaneously and may also perform a control so as not to store the image data captured by the remote camera 30 controlled in the second operable state. Thereby, since the image data in which the subject is captured to be small and which has a low utility value is not recorded, it is possible to prevent the storage capacity of the storage medium from becoming insufficient.

In the above description, the case where the present imaging system St is used in a soccer game and an athletics is described; however, the application is not limited to these games, and the imaging system St can also be used in other games. Other games include, for example, basketball, lacrosse, hockey, water polo, and the like in the case of a shot-game-type play. Further, other games may be a territory-game-type play such as rugby and American football or may be a separated-offense-and-defense-type game such as volleyball, tennis, badminton, and table tennis. Further, other games may be individual sports such as swimming, surfing, skiing, and gymnastics or may be interpersonal sports such as boxing, judo, and sumo.

While several embodiments of the present invention have been described, these embodiments have been presented as examples and are not intended to limit the scope of the invention. These embodiments can be implemented in a variety of other modes, and various omissions, substitutions, and modifications can be made without departing from the scope of the invention. These embodiments and modifications thereof are included within the scope and gist of the invention and are also included within the scope of the invention described in the appended claims and equivalents thereof.

A program for realizing the imaging system St, the control unit 15, and the master camera 10 described above may be recorded on a computer-readable storage medium, and a computer system may read and execute the program. The "computer system" mentioned here is assumed to include an OS or hardware such as peripheral devices.

Further, the "computer-readable storage medium" is a portable medium such as a flexible disc, a magneto-optical disc, a ROM, or a CD-ROM or a storage device such as a hard disk contained in the computer system. Further, the "computer-readable storage medium" is assumed to include a medium that retains a program for a given time such as a volatile memory (RAM) in a computer system serving as a server or a client when a program is transmitted via a network such as the Internet or a communication circuit such as a telephone circuit. Further, the program may be transmitted from a computer system that stores the program in a storage device or the like to another computer system via a transmission medium or by transmission waves in a transmission medium. Here, the "transmission medium" that transmits the program is a medium which has a function of transmitting information, such as a network (communication network) such as the Internet or a communication circuit (communication line) such as a telephone circuit. Further, the program may be a program for realizing some of the functions described above. Further, the program may be a program in which the functions described above can be realized in combination with a program which has already been recorded in a computer system, that is, a so-called a differential file (differential program).

### DESCRIPTION OF THE REFERENCE SYMBOLS

- St: Imaging system
- Us: User
- AR1: First area
- AR2: Second area
- 10: Master camera
- 10a: First master camera
- 10b: Second master camera
- 12: Image process unit
- 15: Control unit
- 16: Display unit
- 18: Communication I/F
- 19: Various sensors
- 19a: Focus sensor
- 19b: Eye sensor
- 19c: Inclination sensor
- 20: GPS unit
- 21: Electronic finder
- 25: Operation unit
- 25a: AF button
- 25b: Release button
- 25c: Function button
- 30: Remote camera
- 30a: First remote camera
- 30b: Second remote camera
- 50: Relay device
- 301: Distance information acquisition unit
- 302: Operation control unit
- 303: Position information acquisition unit
- 304: Setting unit
- 305: Display control unit
- 310: Subject information acquisition unit
- 320: Orientation information acquisition unit
- 330: Request information acquisition unit
- 801: Distance information
- 802, 831: Object

## Claims

1. An imaging control device comprising:
a distance information acquisition unit that acquires distance information from a first imaging device to a subject; and
an operation control unit that controls a state to an operable state in which the first imaging device is capable of performing a remote operation on a second imaging device based on the distance information acquired by the distance information acquisition unit.

2. The imaging control device according to claim 1, comprising:
a position information acquisition unit that acquires position information of each of the first imaging device and the second imaging device,
wherein the operation control unit controls the state to the operable state based on the position information acquired by the position information acquisition unit.

3. The imaging control device according to claim 1 or 2, comprising:
a setting unit that sets the second imaging device arranged in a first area and the second imaging device arranged in a second area that is different from the first area for each area,
wherein the operation control unit controls the state to the operable state for the area.

4. The imaging control device according to claim 3,
wherein a distance from the first imaging device to the first area is different from a distance from the first imaging device to the second area.

5. The imaging control device according to claim 3 or 4,
wherein the setting unit is capable of switching between the second imaging device set in the first area and the second imaging device set in the second area.

6. The imaging control device according to any one of claims 1 to 5,
wherein the operation control unit controls the state to the operable state based on whether or not a distance indicated by the distance information exceeds a first threshold value.

7. The imaging control device according to claim 6,
wherein the operation control unit controls the state to the operable state based on whether or not the distance indicated by the distance information exceeds a second threshold value that is smaller than the first threshold value.

8. The imaging control device according to claim 7, comprising:
a setting unit that sets the second imaging device arranged in a first area and the second imaging device arranged in a second area that is different from the first area for each area,
wherein the first threshold value and the second threshold value are set for the area in which the second imaging device is arranged.

9. The imaging control device according to any one of claims 1 to 8, comprising:
a display control unit that displays at least one of the distance information and an object indicating that the state is the operable state in a finder of the first imaging device.

10. The imaging control device according to any one of claims 1 to 9,
wherein the distance information is obtained based on focus information of the subject in the first imaging device.

11. The imaging control device according to any one of claims 1 to 10, comprising:
a subject information acquisition unit that acquires subject information including at least one of an orientation of the subject imaged by the first imaging device and a movement direction of the subject,
wherein the operation control unit controls the state to the operable state based on the subject information acquired by the subject information acquisition unit.

12. The imaging control device according to claim 11,
wherein the subject information acquisition unit acquires a movement direction of a movable body imaged by the first imaging device, and
the operation control unit controls the state to the operable state based on the movement direction of the movable body acquired by the subject information acquisition unit.

13. The imaging control device according to any one of claims 1 to 12, comprising:
an orientation information acquisition unit that acquires orientation information indicating an orientation in which the first imaging device faces the subject,
wherein the operation control unit controls the state to the operable state based on the orientation information acquired by the orientation information acquisition unit.

14. An imaging control device comprising:
a request information acquisition unit that acquires request information indicating a request in which one first imaging device among a plurality of first imaging devices performs a remote operation on a second imaging device; and
an operation control unit that controls a state to an operable state in which the first imaging device is capable of performing a remote operation on the second imaging device based on the request information acquired by the request information acquisition unit.

15. The imaging control device according to claim 14,
wherein the operation control unit controls the state to an inoperable state in which a remote operation of the one first imaging device is impossible by another first imaging device that is different from the one first imaging device among the plurality of first imaging devices being in the operable state.

16. The imaging control device according to claim 14 or 15,
wherein the request information is information based on an operation of at least one of an operation unit which receives setting the state to the operable state and an operation unit which receives an operation for performing imaging, the operation units being included in each of the plurality of first imaging devices.

17. The imaging control device according to claim 16,
wherein the operation control unit does not control the state to an inoperable state in which a remote operation of the one first imaging device is impossible by an operation of the operation unit included in another first imaging device that is different from the one first imaging device when an operation of the operation unit included in the one first imaging device is continued.

18. The imaging control device according to any one of claims 14 to 17,
wherein the request information is information based on a detection result of at least one of a focusing sensor, an eye sensor, and an inclination sensor that determines an inclination of the device, which are included in each of the plurality of first imaging devices.

19. The imaging control device according to claim 18,
wherein the operation control unit does not control the state to an inoperable state in which a remote operation of the one first imaging device is impossible by a detection of the focusing sensor, the eye sensor, or the inclination sensor included in another imaging device that is different from the one first imaging device when a detection of the focusing sensor, the eye sensor, or the inclination sensor included in the one first imaging device is continued.

20. The imaging control device according to any one of claims 14 to 19,
wherein the request information is information based on a power of any of the plurality of first imaging devices being turned on.

21. An imaging device comprising:
a distance information acquisition unit that acquires distance information from an own device to a subject; and
an operation control unit that controls a state to an operable state in which the own device is capable of performing a remote operation on another imaging device based on the distance information acquired by the distance information acquisition unit.

22. An imaging device comprising:
a request information acquisition unit that acquires request information indicating a request in which an own device among a plurality of imaging devices performs a remote operation on another imaging device; and
an operation control unit that controls a state to an operable state in which the own device is capable of performing a remote operation on the other imaging device based on the request information acquired by the request information acquisition unit.

23. A program that causes a computer used in an imaging control device to function as:
a distance information acquisition unit that acquires distance information from a first imaging device to a subject; and
an operation control unit that controls a state to an operable state in which the first imaging device is capable of performing a remote operation on a second imaging device based on the distance information acquired by the distance information acquisition unit.

24. A program that causes a computer used in an imaging control device to function as:
a request information acquisition unit that acquires request information indicating a request in which a first imaging device among a plurality of first imaging devices performs a remote operation on a second imaging device; and
an operation control unit that controls a state to an operable state in which the first imaging device is capable of performing a remote operation on the second imaging device based on the request information acquired by the request information acquisition unit.

25. An imaging system comprising:
a first imaging device; a second imaging device; and an imaging control device,
wherein the imaging control device comprises:
a distance information acquisition unit that acquires distance information from the first imaging device to a subject; and
an operation control unit that controls a state to an operable state in which the first imaging device is capable of performing a remote operation on the second imaging device based on the distance information acquired by the distance information acquisition unit.

26. An imaging system comprising:
a first imaging device; a second imaging device; and an imaging control device,
wherein the imaging control device comprises:
a request information acquisition unit that acquires request information in which the first imaging device among a plurality of first imaging devices indicates a request of a remote operation on the second imaging device; and
an operation control unit that controls a state to an operable state in which the first imaging device is capable of performing a remote operation on the second imaging device based on the request information acquired by the request information acquisition unit.
